(19) Europäisches Patentamt
European Patent Office
Office européen des brevets

(11) EP 1 651 986 B1

(12) **FASCICULE DE BREVET EUROPEEN**

(45) Date de publication et mention de la délivrance du brevet:
**17.10.2007 Bulletin 2007/42**

(21) Numéro de dépôt: **04767925.3**

(22) Date de dépôt: **28.07.2004**

(51) Int Cl.:
***G02B 1/11*** (2006.01) ***C08J 7/04*** (2006.01)
***C09D 183/08*** (2006.01)

(86) Numéro de dépôt international:
**PCT/FR2004/050364**

(87) Numéro de publication internationale:
**WO 2005/012955 (10.02.2005 Gazette 2005/06)**

(54) **ARTICLE D OPTIQUE COMPRENANT UN EMPILEMENT ANTI-REFLETS MULT ICOUCHES ET PROCEDE DE PREPARATION**

OPTISCHER ARTIKEL MIT EINER MEHRSCHICHTIGEN ANTIREFLEXBESCHICHTUNG UND HERSTELLUNGSVERFAHREN DAFÜR

OPTICAL ARTICLE COMPRISING A MULTILAYER ANTI-REFLECTIVE COATING AND METHOD FOR PRODUCTION THEREOF

(84) Etats contractants désignés:
**AT BE BG CH CY CZ DE DK EE ES FI FR GB GR HU IE IT LI LU MC NL PL PT RO SE SI SK TR**

(30) Priorité: **29.07.2003 FR 0350380**

(43) Date de publication de la demande:
**03.05.2006 Bulletin 2006/18**

(73) Titulaire: **ESSILOR INTERNATIONAL COMPAGNIE GENERALE D'OPTIQUE**
**94227 Charenton cédex (FR)**

(72) Inventeurs:
- **BITEAU, John**
  **Treasure Island, FL 33706 (US)**
- **FANAYAR, Myriam**
  **44100 Nantes (FR)**
- **MASSART, Nathalie**
  **35400 Saint-Malo (FR)**
- **RYCHEL, Dominique**
  **F-75011 Paris (FR)**

(74) Mandataire: **Catherine, Alain et al**
**Cabinet Harlé & Phélip**
**7, rue de Madrid**
**75008 Paris (FR)**

(56) Documents cités:
**EP-A- 0 776 925** **EP-A- 1 022 587**
**EP-A- 1 279 443** **JP-A- 2002 235 036**
**US-A- 6 129 980** **US-B1- 6 572 973**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un article d'optique, par exemple une lentille ophtalmique, comprenant un empilement anti-reflets multicouches sur un substrat transparent en verre organique ou minéral, ledit empilement ne présentant pas de perte d'adhérence par dégradation sous l'effet du rayonnement UV.

Dans le domaine de l'optique ophtalmique, il est classique de revêtir la lentille ophtalmique de divers revêtements afin de conférer à cette lentille diverses propriétés mécaniques et/ou optiques. Ainsi, classiquement, on forme sur une lentille ophtalmique successivement des revêtements tels que des revêtements anti-choc, anti-abrasion, anti-reflets, etc.

Les revêtements anti-reflets sont bien connus dans le domaine de l'optique, et en particulier dans le domaine de fabrication de la lentille ophtalmique, et sont classiquement constitués d'un empilement mono- ou multicouches de matériaux diélectriques tels que SiO, $SiO_2$, $Si_3N_4$, $TiO_2$, $ZrO_2$, $Al_2O_3$, $MgF_2$ ou $Ta_2O_5$, ou leurs mélanges.

Comme cela est bien connu également, les revêtements anti-reflets sont, de préférence, des revêtements multicouches comprenant alternativement des couches de haut indice de réfraction et des couches de bas indice de réfraction.

De façon connue, les couches des revêtements anti-reflets sont appliquées par dépôt sous vide, selon l'une des techniques suivantes : par évaporation, éventuellement assistée par faisceau ionique, par pulvérisation par faisceau d'ion, par pulvérisation cathodique, ou encore par dépôt chimique en phase vapeur assistée par plasma.

Par ailleurs, les revêtements anti-reflets sont généralement déposés, non pas directement sur le substrat transparent, par exemple une lentille, mais sur des revêtements primaires anti-choc et des revêtements anti-abrasion préalablement déposés sur le substrat.

Le document EP-A-1279443, par exemple, qui a pour objet de réaliser des écrans d'ordinateur portable ayant une bonne résistance à l'usure et des propriétés anti-reflets, prévoit de déposer sur un substrat transparent un empilement multicouches comprenant une couche de protection, une couche ayant un indice de réfraction d'au moins 1,60 et une couche à bas indice de réfraction, ne dépassant pas 1,45.

Il est également connu que les empilements anti-reflets soient eux-mêmes revêtus d'une couche supérieure hydrophobe (" Top coat ").

Les revêtements primaires anti-choc et les revêtements anti-abrasion, de nature essentiellement organique, sont généralement déposés par dépôt au trempé ou par centrifugation.

Il est donc apparu souhaitable de pouvoir également déposer les revêtements anti-reflets par ces mêmes techniques, pour des raisons évidentes de simplicité et de continuité de fabrication.

Ainsi, on a développé des techniques de dépôt par voie sol-gel d'oxydes minéraux sous forme colloïdale, afin de réaliser des revêtements anti-reflets.

Parmi les oxydes minéraux fréquemment utilisés, l'oxyde de titane est l'un des oxydes minéraux préférés pour la réalisation de certaines couches des revêtements anti-reflets.

Cependant, d'autres oxydes peuvent être utilisés. Par exemple, dans le document EP-A-1279443, outre $TiO_2$, on cite notamment ZnO, $Sb_2O_5$, $Y_2O_3$, $La_2O_3$, $ZrO_2$,$Al_2O_3$ ou des oxydes complexes.

Cependant, on a constaté que les couches contenant de l'oxyde de titane colloïdal avaient pour inconvénient de présenter une perte d'adhérence dans le temps, probablement par dégradation sous l'effet du rayonnement UV. Un tel inconvénient apparaît, en particulier, dans le cas d'articles d'optique tels que des lentilles ophtalmiques, qui sont soumises à la fois au rayonnement UV et à l'humidité.

La présente invention a donc pour objet de fournir un article transparent comprenant un substrat en verre minéral ou organique et un empilement anti-reflets qui remédie aux inconvénients de l'art antérieur tout en conservant d'excellentes propriétés de transparence, d'absence de défauts optiques tels que des craquelures, et une aptitude à supporter les variations de température.

Les études menées pour résoudre ce problème ont montré, en particulier, que la formulation de la couche bas indice jouait un rôle essentiel dans la stabilisation de la couche haut indice et devait être définie de façon assez précise.

La présente invention a encore pour objet un procédé de fabrication d'un article tel que défini ci-dessus, qui s'intègre aisément dans le processus classique de fabrication et qui, en particulier, évite autant que possible la mise en oeuvre de dépôts sous vide ou de toute autre étape de traitement constituant une rupture dans le processus de fabrication de cet article.

Les buts ci-dessus sont atteints selon l'invention par un article comprenant un substrat en verre organique ou minéral et au moins un empilement anti-reflets multi-couches, qui comprend successivement et dans l'ordre en partant du substrat :

a) une couche haut indice (HI), ayant un indice de réfraction $n_D^{25}$ de 1,50 à 2,00 et résultant du durcissement d'une première composition durcissable et comprenant

(i) une matrice hybride organique-inorganique résultant de l'hydrolyse et de la condensation d'au moins un composé précurseur comportant un groupement époxy ou (méth)acryloxy et au moins deux fonctions hydrolysables en groupements silanol, et

(ii) au moins un oxyde métallique ou au moins un chalcogénure colloïdal ou des mélanges de ces composés, sous forme de particules d'un diamètre de 1 à 100 nm, préférentiellement de 2 à 50 nm, dispersées au sein de la matrice hybride organique-inorganique, et, directement sur cette couche haut indice (HI),

b) une couche bas indice (BI), ayant un indice de réfraction $n_D^{25}$ allant de 1,38 à 1,44 obtenue par dépôt et durcissement d'une seconde composition durcissable et comprenant le produit d'hydrolyse et de condensation de :

(i) au moins un composé précurseur (I) comprenant 4 fonctions hydrolysables par molécule de formule

$$Si\,(W)_4$$

dans laquelle les groupes W, identiques ou différents, sont des groupements hydrolysables, et à la condition que les groupements W ne représentent pas tous en même temps un atome d'hydrogène,

(ii) au moins un silane précurseur (II) porteur d'au moins un groupement fluoré et comprenant au moins deux groupements hydrolysables par molécule,

ladite seconde composition comprenant au moins 10 % en masse de fluor dans son extrait sec théorique (EST), et le rapport molaire I / I + II du composé précurseur (I) à la somme composé précurseur (I) + silane précurseur (II) de la seconde composition étant supérieur à 80 %.

D'une manière générale, l'extrait sec théorique (EST) d'une composition est le poids en matière solide provenant des constituants de cette composition.

Par poids en matière solide provenant des silanes hydrolysables, en particulier des constituants (I) et (II), on entend le poids calculé en unités $Q_kSiO_{(4-k)/2}$, dans lesquelles Q est un groupement organique directement lié à l'atome de silicium par une liaison Si-C et $Q_kSiO_{(4-k)/2}$ provient de $Q_kSiR'_{(4-k)}$ où SiR' engendre SiOH par traitement hydrolytique et k désigne 0, 1 ou 2.

Dans le cas de colloïdes minéraux, le poids en matière solide provenant de ceux-ci est leur poids de matière sèche.

En cc qui concerne les catalyseurs non réactifs, le poids de matière solide correspond à leur propre poids.

Dans certaines applications, il est préférable que la surface principale du substrat soit revêtue d'une couche anti-abrasion ou d'une couche de revêtement primaire et d'une couche de revêtement anti-abrasion.

De façon particulièrement avantageuse, les particules minérales dispersées dans la matrice de la couche haut indice contiennent au moins un oxyde ou chalcogénure colloïdal choisi dans le groupe suivant : $TiO_2$, ZnO, ZnS, ZnTe, CdS, CdSe, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, oxyde ternaire à base de bismuth, $MoS_2$, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$, et des mélanges de ces composés. Eventuellement, la couche haut indice contient également de la silice $SiO_2$.

De préférence l'oxyde métallique dispersé dans la couche haut indice est un oxyde de titane composite sous forme rutile.

Selon une autre caractéristique préférentielle, les particules minérales dispersées dans la matrice hybride organique-inorganique de la couche haut indice (HI) ont une structure composite à base de $TiO_2$, $SnO_2$, $ZrO_2$ et $SiO_2$. De telles particules sont décrites dans la demande de brevet japonais JP-11310755.

Des particules d'oxyde métallique sous forme de composite ayant une structure coeur/écorce avec un coeur de $TiO_2$, $SnO_2$ sous forme rutile et une écorce comprenant un mélange de $ZrO_2$ et de $SiO_2$ telles que décrites dans la demande de brevet japonais JP-2000-204301 sont particulièrement recommandées dans le cadre de l'invention.

Par ailleurs, au moins 60 %, de préférence au moins 65 % et mieux au moins 70 % en masse de l'extrait sec théorique (E.S.T.) de la couche superficielle bas indice provient du composé précurseur (I).

Le rapport molaire I / I + II du composé précurseur (I) à la somme composé précurseur (I) + silane précurseur (II) est d'au moins 85 %, de préférence 90 %, et mieux 95 %.

Dans un mode de réalisation particulièrement avantageux, les groupes W du composé précurseur (I) de formule $Si(W)_4$ sont des groupements hydrolysables qui peuvent être identiques ou différents, à condition que les quatre groupements W ne représentent pas simultanément un atome d'hydrogène. De préférence, ces groupements hydrolysables W représentent un groupe tel que OR, Cl, H, R étant un alkyle, de préférence un alkyle en $C_1$-$C_6$ tel que $CH_3$, $C_2H_5$, $C_3H_7$.

L'empilement anti-reflets selon l'invention peut être uniquement constitué par l'association de deux couches haut indice (HI)/bas indice (BI) telles que définies ci-dessus. Cependant, cet empilement peut aussi comprendre des couches supplémentaires.

En particulier, il pourrait être plus avantageux de réaliser au moins trois couches superposées, respectivement en partant du substrat, une couche moyen indice (MI), une couche haut indice (HI) et une couche bas indice (BI), la couche moyen indice (MI) comprenant un colloïde de particules minérales, oxydes métalliques, chalcogénures ou leurs mélanges, dispersées dans une matrice organique.

De manière générale, la couche moyen indice MI a de préférence un indice de réfraction n et une épaisseur physique e vérifiant les relations suivantes :

$$1{,}45 < n < 1{,}80$$

$$40\text{nm} < e < 200\text{nm}.$$

Mais, selon le but recherché, on pourrait aussi réaliser un empilement tricouches (BI/HI/BI), ou tétracouches (HI/BI/HI/BI), les indices et les épaisseurs (physiques) des différentes couches de l'empilement étant choisis de façon appropriée, pour obtenir l'effet anti-reflets, selon des techniques connues de l'homme de l'art.

Ces couches haut indice (HI) et bas indice (BI) supplémentaires peuvent être analogues à celles définies selon l'invention, mais ce peut être également des couches (HI) et (BI) classiques, bien connues dans la technique.

D'une manière générale, les indices de réfraction auxquels il est fait référence dans la présente invention sont les indices de réfraction à 550 nm de longueur d'onde et à 25 °C.

De façon particulièrement avantageuse, la couche de matériau de haut indice de réfraction (HI) a un indice de réfraction supérieur à 1,7, de préférence allant de 1,72 à 1,82, mieux de 1,72 à 1,78 et mieux encore de l'ordre de 1,77. Son épaisseur physique peut aller de 10 à 200 nm, et de 80 à 150 nm.

Comme on l'a indiqué, l'indice de réfraction de la couche bas indice (BI) doit être défini de façon particulièrement précise et peut aller de 1,38 à 1,44.

L'épaisseur physique de cette couche (BI) peut aller de 40 à 150 nm et est, de préférence, de l'ordre de 90 nm.

Selon la présente invention, l'empilement anti-reflets peut être appliqué sur la face avant et/ou la face arrière du substrat, mais il est de préférence appliqué sur la face arrière.

L'invention concerne également un procédé de fabrication d'un article tel que défini précédemment, comprenant les étapes de :

- dépôt sur au moins l'une des surfaces du substrat d'au moins une couche de matériau de haut indice de réfraction (HI), par application puis durcissement d'une première composition durcissable (HI) et comprenant au moins un composé précurseur comportant un groupement époxy ou (méth)acryloxy et au moins deux fonctions hydrolysables à groupements silanol, au moins un oxyde métallique ou au moins un chalcogénure colloïdal ou des mélanges de ces composés sous forme de particules ayant un diamètre de 2 à 50 nm,
- dépôt sur ladite couche (HI) d'au moins une couche de matériau de bas indice de réfraction (BI), par application puis durcissement d'une seconde composition durcissable (BI), de préférence exempte de toute charge minérale, et comprenant le produit d'hydrolyse et de condensation de :

 (i) au moins un composé précurseur (I) comprenant 4 fonctions hydrolysables par molécule de formule

 $$Si(W)_4$$

 dans laquelle les groupes W sont des groupements hydrolysables, identiques ou différents, et à la condition que les groupements W ne représentent pas tous en même temps un atome d'hydrogène,

 (ii) au moins un silane précurseur (II) porteur d'au moins un groupement fluoré et comprenant au moins deux groupements hydrolysables par molécule,

ladite seconde composition comprenant au moins 10 % en masse de fluor dans son extrait sec théorique (EST), et le rapport molaire I / I + II du composé précurseur (I) à la somme composé précurseur (I) + silane précurseur (II) étant supérieur à 80 %.

Les études menées, en particulier, pour la mise au point de lentilles ophtalmiques ont montré que la formulation de la couche bas indice (BI) jouait un rôle essentiel dans la stabilisation de la couche haut indice (HI).

**Composition (BI)**

D'une façon générale, la couche bas indice comprend au moins un composé précurseur (I) tel que défini précédemment, de préférence un chlorosilane ou un alcoxysilane, de préférence un alcoxysilane et mieux un tétraalcoxysilane ou un hydrolysat de ceux-ci, et un silane précurseur (II) comprenant un fluorosilane comportant au moins deux groupements hydrolysables par molécule.
Parmi les chlorosilanes (I), on peut citer les composés de formules $SiCl_4$, $R^1SiCl_3$, $R^1R^2SiCl_2$ et $R^1R^2R^3SiCl$ dans lesquels $R^1$, $R^2$ et $R^3$ identiques ou différents représentent un groupe alcoxy en $C_1$-$C_6$ tel qu'un groupe méthoxy, éthoxy, propoxy ou butoxy.
Parmi les tétraalcoxysilanes utilisables comme composé précurseur (I) dans la composition (BI) de la présente invention, on peut citer le tétraméthoxysilane, le tétraéthoxysilane, le tétrapropoxysilane et le tétrabutoxysilane. On utilisera de préférence le tétraéthoxysilane.
La composition durcissable de la couche bas indice (BI) peut comprendre seulement les silanes du composé précurseur (I) et du fluorosilane précurseur (II). Toutefois, dans certains cas, elle peut aussi comprendre un tri- ou dialcoxysilane différent des silanes du composé précurseur (I) de formule $Si(W)_4$ et du fluorosilane précurseur (II) dans une proportion en poids ne dépassant pas 20% et de préférence ne dépassant pas 10 % du poids total des silanes présents dans ladite composition.
Il est en outre nécessaire que la teneur en composés précurseurs (I) soit très élevée pour obtenir le résultat recherché. En effet, alors que, jusqu'à présent, on pensait qu'une proportion molaire supérieure à 80 % risquait d'entraîner des craquelures, il est apparu que le rapport molaire du composé précurseur I à la somme du composé précurseur (I) et du silane précurseur (II) pouvait, au contraire, être de l'ordre de 85 %, de préférence 90 % et même 95 %.
Comme indiqué précédemment, le silane précurseur (II) est un fluorosilane comprenant au moins deux groupes hydrolysables par molécules.
Les fluorosilanes précurseurs sont préférentiellement des polyfluoroéthers et mieux des poly(perfluoroéthers).
Ces fluorosilanes sont bien connus et sont décrits entre autres dans les brevets US-5,081,192 ; US-5,763,061, US-6,183,872 ; US-5,739,639 ; US-5,922,787 ; US-6,337,235 ; US-6,277,485 et EP-933 377.
Les groupements hydrolysables (représentés par la lettre X dans la suite de la description) du fluorosilane (II) sont directement liés à l'atome de silicium.
Plus précisément, parmi les fluorosilanes précurseurs préférés, on peut citer les fluorosilanes de formules :

1. $Rf\text{-}SiR'_aX_{3-a}$

où Rf est un groupe organique fluoré en $C_4$-$C_{20}$, R' est un groupe hydrocarboné monovalent en $C_1$-$C_6$, X est un groupe hydrolysable et a est un entier de 0 à 2 ; et

2. $CF_3CH_2CH_2\text{-}SiR'_aX_{3-a}$

où R', X et a sont définis comme préalablement.
De préférence, Rf est un groupe polyfluoroalkyle de formule $C_nF_{2n+1}\text{-}Y_y$ ou $CF_3CF_2CF_2\ O(CF(CF_3)CF_2O)_j\ CF(CF_3)Y_y$, Y représente $(CH_2)_m$, $CH_2O$, NR", $CO_2$, CONR", S, $SO_3$ et $SO_2NR"$ ; R" est H ou un groupe alkyle ou $C_1$-$C_8$, n est un entier de 2 à 20, y est 1 ou 2, j est un entier de 1 à 50, de préférence 1 à 20, et m est un entier de 1 à 3.
Des exemples de fluorosilanes appropriés sont :

$R'f(CH_2)_2Si(OCH_3)_3$,

$R'f(CH_2)_2Si(OC_2H_5)_3$,

$R'f(CH_2)_2SiCl_3$,

$R'f(CH_2)_2Si(OC(CH_3)=CH_2)_3$,

$R'f(CH_2)_2SiCH_3(OCH_3)_2$,

$R'f(CH_2)_3Si(OCH_3)_3$,

$R'f(CH_2)_3SiCH_3(OCH^3)_2$,

$R'fNH(CH_2)_2Si(OCH_3)_2$,

$R'fNH(CH_2)_3SiCH_3(OCH_3)_2$,

$R'fNH(CH_2)_3Si(OCH_2CH_3)_3$,

$R'fNH(CH_2)_2NH(CH_2)_3Si(OCH_3)_3$,

$R'fNH(CH_2)_2NH(CH_2)_3SiCH_3(OCH_3)_2$,

$R'fNH(CH_2)_2NH(CH_2)_3Si(OCH_2CH_3)_3$,

$R'fCONH(CH_2)_3Si(OCH_3)_3$,

$R'fCONH(CH_2)_3Si(OCH_2CH_3)_3$,

$R'fCONH(CH_2)_3SiCH_3(OCH_3)_2$,

$R'fSO_2NH(CH_2)_3Si(OCH_3)_3$,

$R'fSO_2NH(CH_2)_3Si(OCH_2CH_3)_3$,

$R'fSO_2NH(CH_2)_3SiCH_3(OCH_3)_2$,

$R'fCO_2(CH_2)_3Si(OCH_3)_3$,

$R'fCO_2(CH_2)_3Si(OCH_2CH_3)_3$

et

$R'fCO_2(CH_2)_3SiCH_3(OCH_3)_2$.

R'f représente un groupe $C_nF_{2n+1}$ (n est un entier de 2 à 20), tel que $C_2F_5$, $C_3F_7$, $C_4F_9$, $C_6F_{13}$, $C_8F_{17}$, $C_{10}F_{21}$, $C_{12}F_{25}$, $C_{14}F_{29}$, $C_{16}F_{33}$, $C_{18}F_{37}$ et $C_{20}F_{41}$.

Parmi les silanes à liaison éther, on peut citer :

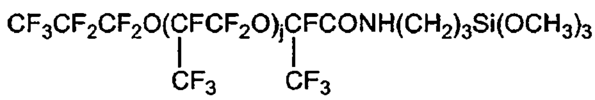

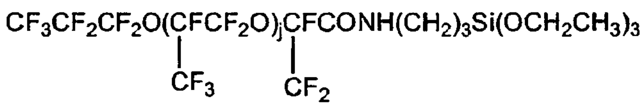

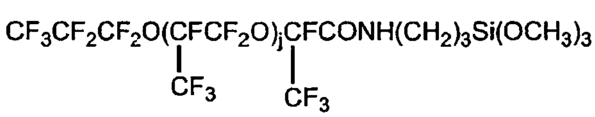

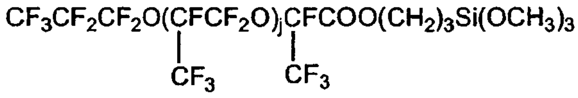

$C_3F_7O(CF(CF_3)CF_2O)_3CF(CF_3)CH_2O(CH_2)_3Si(OCH_3)_3$

$C_3F_7O(CF(CF_3)CF_2O)_3CF(CF_3)CH_2O(CH_2)_3Si(OCH_2CH_3)_3$

$C_3F_7O(CF(CF_3)CF_2O)_3CF(CF_3)CH_2O(CH_2)_3SiCH_3(OCH_3)_2$.

Les silanes particulièrement préférés sont :

$C_4F_9(CH_2)_2Si(OCH_3)_3$

$C_4F_9(CH_2)_2Si(OCH_2CH_3)_3$

$C_4F_9(CH_2)_2SiCH_3(OCH_3)_2$

$C_4F_9(CH_2)_2SiCl_3$

$C_8F_{17}(CH_2)_2(Si(OCH_3)_3$

$C_8F_{17}(CH_2)_2Si(CH_2CH_3)_3$

$C_8F_{17}(CH_2)_2SiCH_3(OCH_3)_2$

$C_3F_7O(CF(CF_3)CF_2O)_3CF(CF_3)CH_2O(CH_2)Si(OCH_3)_3$

$C_3F_7O(CF(CF_3)CF_2O_3CF(CF_3)CH_2O(CH_2)_3Si(OCH_2CH_3)_3$

et

$C_3F_7O(CF(CF_3)CF_2O)_3CF(CF_3)CH_2O(CH_2)_3SiCH_3(OCH_3)_2$

Parmi les trifluoropropylsilanes préférés, on peut citer :

$CF_3CH_2CH_2Si(OCH_3)_3$

$CF_3CH_2CH_2Si(OCH_2CH_3)_3$

$CF_3CH_2CH_2SiCl_3$

$CF_3CH_2CH_2Si(OC(CH_3)=CH_2)_3$

$CF_3CH_2CH_2SiCH_3(OCH_3)_2$

$CF_3CH_2CH_2SiCH_3(OCH_2CH_3)_2$

et

$CF_3CH_2CH_2SiCH_3Cl_2$

Une autre classe de fluorosilanes préférés sont ceux contenant des groupements fluoropolyethers décrits dans US-6,277,485.

Ces fluorosilanes répondent à la formule générale :

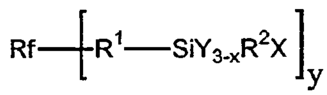

où Rf est un groupe pcrfluoropolyéther monovalent ou divalent ; $R^1$ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; $R^2$ est un groupe alkyle inférieur (c'est-à-dire un groupe alkyle $C_1$-$C_4$) ; Y est un halogènure, un groupe alcoxy inférieur (c'est-à-dire un groupe alcoxy en $C_1$-$C_4$, de préférence méthoxy ou éthoxy), ou un groupe acyloxy inférieur (c'est-à-dire - $OC(O)R^3$ où $R^3$ est un groupe alkyle en $C_1$-$C_4$); x est O ou 1 ; et y est 1 (Rf est monovalent) ou 2 (Rf est divalent).

Les composés appropriés ont en général une masse molaire moyenne en nombre d'au moins 1000. De préférence, Y est un groupe alcoxy et Rf est un groupe perfluoropolyéther.

D'autres fluorosilanes recommandés sont ceux de formule :

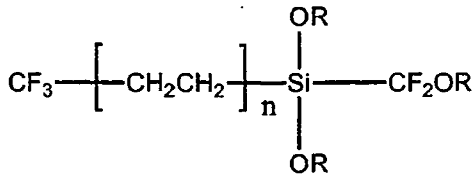

où n = 5, 7, 9 ou 11 et R est un radical alkyle, de préférence en $C_1$-$C_6$ tel que $-CH_3$, $-C_2H_5$ et $-C_3H_7$ ;

$CF_3CH_2CH_2SiCl_3$ ;

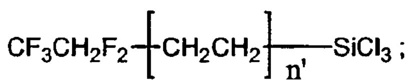

et

$CF_3CH_2F_2\text{-}CH_2CH_2\text{-}SiRCl_2$

où n'= 7 ou 9 et R est tel que défini ci-dessus.

Des fluorosilanes également recommandés sont des fluoropolymères à groupements organiques décrits dans le brevet US-6,183,872.

Des fluoropolymères à groupements organiques porteurs de groupes Si sont représentés par la formule générale suivante et présentent un poids moléculaire de $5.10^2$ à $1.10^5$ :

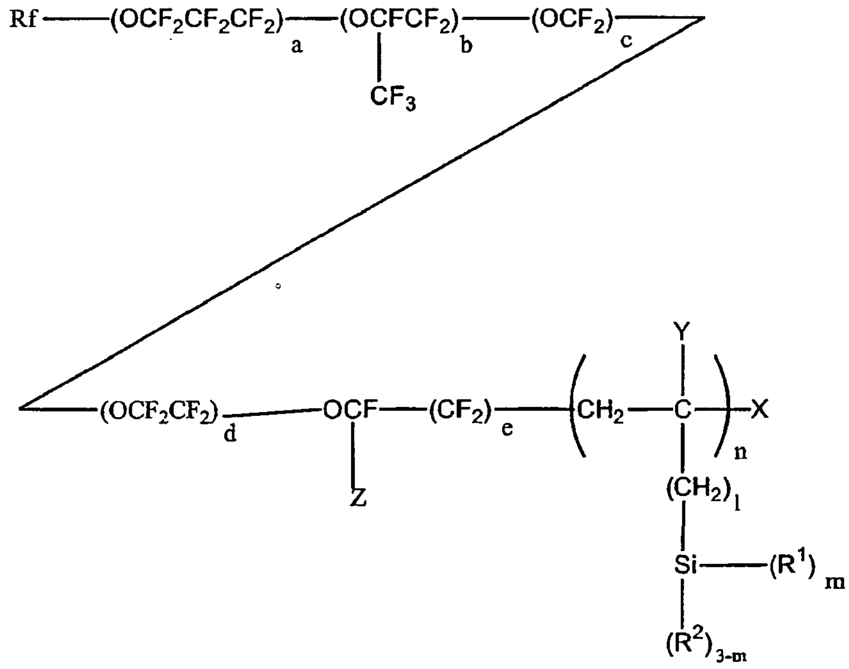

dans laquelle Rf représente un groupement perfluoroalkyle ; Z représente un groupement fluoro ou trifluorométhyle ; a, b, c, d et e représentent chacun indépendamment l'un de l'autre 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupement alkyle comprenant de 1 à 4 atomes de carbone ; X représente un atome d'hydrogène, de brome ou d'iode ; $R^1$ représente un groupement hydroxy ou un groupement hydrolysable ; $R^2$ représente un atome d'hydrogène ou un groupement hydrocarboné monovalent ; 1 représente 0, 1 ou 2 ; m représente 1, 2 ou 3 ; et n représente un entier au moins égal à 1, préférentiellement au moins égal à 2.

Un fluorosilane recommandé est commercialisé sous la dénomination Optool DSX®.

On utilisera de préférence le tridécafluoro-1,1,2,2-tétrahydroctyl-1-triéthoxysilane $(CF_3(GF_2)_5CH_2CH_2Si(OC_2H_5)_3)$.

Le catalyseur de la composition (BI) peut être tout catalyseur généralement utilisé comme catalyseur de durcissement de compositions à base de polyalcoxysilanes dans les quantités usuelles.

Cependant, comme catalyseurs de durcissement préférés, on peut citer les sels d'amine, par exemple les catalyseurs commercialisés par Air Products sous les dénominations POLYCAT SA-1/10®, DABCO 8154® et DABCODA-20®, les sels d'étain tels que le produit commercialisé par Acima sous la dénomation METATIN 713® et l'acétylacétate d'aluminium, en particulier l'acétylacétate d'aluminium 99% commercialisé par Sigma Aldrich.

La composition (BI) peut également comporter un ou plusieurs tensioactifs, en particulier des tensioactifs fluorés ou fluorosiliconés, généralement à raison de 0,001 à 1 % en poids, de préférence 0,01 à 1 % en poids, par rapport au poids total de la composition. Parmi les tensioactifs préférés, on peut citer le FLUORAD® FC430 commercialisé par 3M, le EFKA 3034® commercialisé par EFKA, le BYK-306® commercialisé par BYK et le Baysilone OL31® commercialisé par BORCHERS.

__Composition (HI)__

La composition de la couche haut indice (HI) doit aussi être réglée avec précision pour obtenir une bonne résistance, en particulier pour un article soumis au rayonnement UV et en milieu humide.

La matrice hybride organique-inorganique de la composition (HI) résulte préférentiellement d'un hydrolysat d'un silane, de préférence d'au moins un époxyalcoxysilane. Les époxyalcoxysilanes préférés comportent un groupement époxy et trois groupements alcoxy, ces derniers étant directement liés à l'atome de silicium. Les époxyalcoxysilanes

particulièrement préférés répondent à la formule (I) :

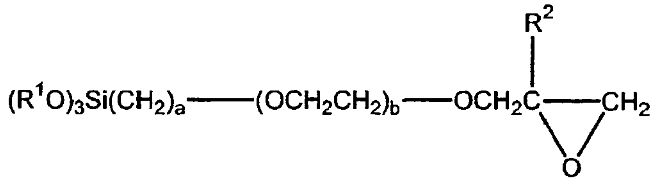 (I)

dans laquelle :

$R^1$ est un groupement alkyle de 1 à 6 atomes de carbone, préférentiellement un groupement méthyle ou éthyle,
$R^2$ est un groupement méthyle ou un atome d'hydrogène,
a est un nombre entier de 1 à 6,
b représente 0,1 ou 2.

Des exemples de tels époxysilanes sont le γ-glycidoxypropyltriéthoxysilane ou le γ-glycidoxypropyltriméthoxysilane.
On utilise préférentiellement le γ-glycidoxypropyltriméthoxysilane.
L'hydrolysat de silane est préparé de façon connue en soi. Les techniques exposées dans le brevet US 4 211 823 peuvent être utilisées.
Dans un mode de réalisation préférentiel, les particules dispersées dans cette matrice ont une structure composite à base de $TiO_2$, $SnO_2$, $ZrO_2$ et $SiO_2$. Dans une telle structure, le titane $TiO_2$ est de préférence sous forme rutile, la phase rutile du titane étant moins photo-active que la phase anatase.
On peut cependant utiliser comme nanoparticules pour la couche haut indice, d'autres oxydes ou chalcogénures photo-actifs choisis dans le groupe suivant : $TiO_2$, ZnO, ZnS, ZnTe, CdS, CdSe, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, oxyde ternaire à base de bismuth, $MoS_2$, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$.
Dans les exemples qui vont suivre, on a utilisé, comme sol de particules minérales colloïdales enrobées dans la composition (HI), le produit commercialisé sous la dénomination commerciale Optolake 1120Z® (11RU7-A-8) par la société Catalyst & Chemical (CCIC).
Comme exemples de catalyseurs de durcissement de la composition (HI), on peut notamment citer les composés de l'aluminium, et en particulier les composés de l'aluminium choisi parmi :

- les chélates d'aluminium, et
- les composés de formules (II) ou (III) détaillées dessous :

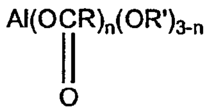 (II)

$$(R'O)_{3-n}Al(OSiR''_3)_n \qquad (III)$$

dans lesquelles :

R et R' sont des groupements alkyles à chaîne linéaire ou ramifiée de 1 à 10 atomes de carbone,
R'' est un groupement alkyle à chaîne linéaire ou ramifiée de 1 à 10 atomes de carbone, un groupement phényle, un groupe

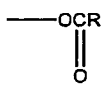

où R a la signification indiquée ci-dessus, et n est un nombre entier de 1 à 3.

Comme on le sait, un chélate d'aluminium est un composé formé en faisant réagir un alcoolate ou un acylate d'aluminium avec des agents séquestrants exempts d'azote et de soufre, contenant de l'oxygène comme atome de coordination.

Le chélate d'aluminium est de préférence choisi parmi les composés de formule (IV) :

$AlX_vY_{3-v}$ (IV)

dans laquelle :

X est un groupement OL où L est un groupement alkyle de 1 à 10 atomes de carbone,
Y est au moins un coordinat produit à partir d'un composé de formule (1) ou (2) :

(1) $M^1$ CO $CH_2$ $COM^2$

(2) $M^3$ CO $CH_2$ $COOM^4$

dans lesquelles

$M^1$, $M^2$, $M^3$ et $M^4$ sont des groupements alkyles de 1 à 10 atomes de carbone,
et v prend les valeurs 0,1 ou 2.

Comme exemples de composés de formule (IV), on peut citer l'acétylacétonate d'aluminium, l'éthylacétoacétate bisacétylacétonate d'aluminium, le biséthylacétoacétate acétylacétonate d'aluminium, le di-n-butoxyde monoéthylacétoacétate d'aluminium et le diipropoxyde monométhylacétoacétate d'aluminium.

Comme composés de formule (III) ou (IV), on choisit préférentiellement ceux pour lesquels R' est un groupement isopropyle ou éthyle, et R et R" sont des groupements méthyle.

De façon particulièrement avantageuse, on utilisera de préférence comme catalyseur de durcissement de la composition (HI) l'acétyleacétonate d'aluminium, dans une proportion de 0,1 à 5 % en poids du poids total de la composition.

Les compositions (BI) et (HI) de l'invention, en particulier les compositions (HI) peuvent comporter, en outre, un solvant organique dont le point d'ébullition, à pression atmosphérique, est de préférence compris entre 70 et 140 °C.

Comme solvant organique utilisable selon l'invention, on peut citer les alcools, les esters, les cétones, le tétrahydropyrane, et leurs mélanges.

Les alcools sont de préférence choisis parmi les alcools inférieurs (en $C_1$-$C_6$), tels que le méthanol, l'éthanol et l'isopropanol.

Les esters sont de préférence choisis parmi les acétates, et on peut citer en particulier l'acétate d'éthyle.

Parmi les cétones, on utilisera de préférence la méthyléthylcétone.

Parmi les solvants appropriés, on peut citer :

- méthanol ($CH_3OH$, Carlo Erba),
- 1-propanol ($CH_3CH_2CH_2OH$, VWR International),
- 1-méthoxy-2-propanol ($CH_3CH(OH)CH_2OCH_3$, Sigma Aldrich),
- 4-hydroxy-4-méthyl-2-pentanone $(CH_3)_2C(OH)CH_2COCH_3$, VWR International),
- 2-méthyl-2-butanol ($(CH_3)_2C(OH)CH_2CH_3$ Sigma Aldrich),
- butoxyéthanol ($CH_3(CH_2)_3OCH_2CH_2OH$, Sigma Aldrich),
- mélange eau/solvants organiques,
- ou tous mélanges de ces solvants contenant au moins un alcool.

Les compositions (HI) et (BI) peuvent aussi inclure divers additifs tels que des agents tensioactifs favorisant un meilleur étalement de la composition sur la surface à revêtir, des absorbeurs UV ou des pigments.

Les revêtements anti-reflets selon l'invention peuvent être déposés sur tout substrat approprié, en verre organique ou minéral, par exemple des lentilles ophtalmiques en verre organique, ces substrats pouvant être nus ou éventuellement revêtus par des revêtements anti-abrasion, anti-choc ou autres revêtements classiquement utilisés.

Parmi les substrats en verre organique convenant pour les articles d'optique selon l'invention, on peut citer les substrats en polycarbonate (PC) et ceux obtenus par polymérisation des méthacrylates d'alkyle, en particulier des

méthacrylates d'alkyle en $C_1$-$C_4$, tels que le méthyl(méth)acrylate et l'éthyl(méth)acrylatc, les (méth)acrylates aromatiques polyéthoxylés tels que les bisphénolates diméthacrylates polyéthoxylés, les dérivés allyliques tels que les allyl carbonates de polyols aliphatiques ou aromatiques, linéaires ou ramifiés, les thio-(méth)acryliques, les substrats en polythiouréthane et en polyépisulfure.

Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butylènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate).

Les substrats particulièrement recommandés sont les substrats obtenus par polymérisation du bis allyl carbonate du diéthylèneglycol, vendus sous la dénomination commerciale CR 39® par la Société PPG INDUSTRIE (lentille ORMA® ESSILOR).

Parmi les substrats également recommandés, on peut citer les substrats obtenus par polymérisation des monomères thio(méth)acryliques, tels que ceux décrits dans la demande de brevet français FR-A-2 734 827.

Bien évidemment, les substrats peuvent être obtenus par polymérisation de mélanges des monomères ci-dessus.

On peut utiliser comme couche de primaire anti-choc toutes couches de primaire anti-choc classiquement utilisées pour les articles en matériau polymère transparent, tels que des lentilles ophtalmiques.

Parmi les compositions de primaire préférées, on peut citer les compositions à base de polyuréthanne thermoplastiques, telles que celles décrites dans les brevets japonais 63-141001 et 63-87223, les compositions de primaires poly(méth)acryliques, telles que celles décrites dans le brevet US-5 015 523, les compositions à base de polyuréthanes thermo-durcissables, telles que celles décrites dans le brevet EP-0404111 et les compositions à base de latex poly (méth)acryliques et latex de polyuréthane, telles que celles décrites dans les documents de brevets US 5 316 791, EP-0680492.

Les compositions de primaires préférées sont les compositions à base de polyuréthanne et les compositions à base de latex, en particulier les latex de polyuréthanne.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex poly(méth)acryliques préférés sont les latex de copolymères acrylate-styrène.

De tels latex de copolymères acrylate-styrène sont disponibles commercialement auprès de la Société ZENECA RESINS sous la dénomination NEOCRYL®.

Les latex de polyuréthanne sont également connus et disponibles dans le commerce.

A titre d'exemple, on peut citer les latex de polyuréthanne contenant des motifs polyesters. De tels latex sont également commercialisés par la Société ZENECA RESINS sous la dénomination NEOREZ® et par la Société BAXENDEN CHEMICAL sous la dénomination WITCOBOND®.

On peut également utiliser dans les compositions de primaire des mélanges de ces latex, en particulier de latex polyuréthanne et de latex poly(méth)acrylique.

Ces compositions de primaire peuvent être déposées sur les faces du de l'article d'optique par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 $\mu$m, de préférence 0,5 à 1,5 $\mu$m.

Les revêtements durs anti-abrasion des articles d'optique selon l'invention, et notamment des lentilles ophtalmiques, peuvent être tous revêtements anti-abrasion connus dans le domaine de l'optique ophtalmique.

Parmi les revêtements durs anti-abrasion recommandés dans la présente invention, on peut citer les revêtements obtenus à partir de compositions à base d'hydrolysat de silane, en particulier d'hydrolysat d'époxysilane, par exemple celles décrites dans les brevets EP 0614 957 et US 4 211 823, ou des compositions à base de dérivés (méth) acryliques.

Une composition pour revêtement dur anti-abrasion préférée, comprend un hydrolysat d'époxysilane et de dialkyldialkoxysilane, de la silice colloïdale et une quantité catalytique d'acétylacétonate d'aluminium, le reste étant essentiellement constitué par des solvants classiquement utilisés pour la formulation de telles compositions.

Préférentiellement l'hydrolysat utilisé est un hydrolysat de $\gamma$-glycidoxypropyltriméthoxysilane (GLYMO) et de diméthyldiéthoxysilane (DMDES).

Bien évidemment, les revêtements anti-reflets des articles d'optique selon l'invention peuvent éventuellement être revêtus de revêtements permettant de modifier leurs propriétés de surface, tels que des revêtements anti-salissures, hydrophobes. Il s'agit généralement de matériaux de type fluorosilanes, de quelques nanomètres d'épaisseur, de préférence 1 à 10 nm, mieux 1 à 5 nm

Les fluorosilanes utilisés peuvent être les mêmes que les silanes précurseurs (II) de la composition engendrant la couche bas indice, mais ils sont utilisés à des teneurs élevées ou purs dans la couche antisalissure.

Dans le procédé de fabrication d'un article selon l'invention tel que défini précédemment, les compositions (HI) et (BI) selon l'invention peuvent être déposées par toute technique appropriée connue en soi : dépôt au trempé (" dip coating ") ou dépôt par centrifugation (" spin coating ") notamment, qui est préféré.

Le procédé de l'invention peut également comporter, entre le dépôt de la couche (HI) et celui de la couche (BI), une étape de prédurcissement de la couche (HI) avant le dépôt de la couche (BI).

Ce prédurcissement est par exemple un traitement infrarouge, suivi d'un refroidissement par un flux d'air à température ambiante.

D'une manière générale, les revêtements anti-reflets des articles selon l'invention présentent des coefficients de réflexion Rm (moyenne de la réflexion entre 400 et 700 nm) comparables à ceux des revêtements anti-reflets de l'art antérieur. En effet, les revêtements anti-reflets selon l'invention présentent généralement une valeur de Rm inférieure à 1,4 %.

Les définitions des coefficients de réflexion (p) à une longueur d'onde donnée et Rm (moyenne de la réflexion entre 400 et 700 nm) sont connus de l'homme de l'art et sont mentionnés dans le document de norme ISO/WD 8980-4.

Comme on l'a indiqué, les articles d'optique selon l'invention présentent des propriétés particulières d'adhésion des couches de l'empilement anti-reflets sur le substrat. L'adhésion des couches de l'empilement anti-reflets peut être déterminée à l'aide du test N x 10 coups, tel que décrit dans la demande internationale WO 99/49097.

On va maintenant décrire certains exemples de réalisation illustrant l'invention de façon plus détaillée mais non limitative.

Pour l'appréciation des propriétés des verres revêtus obtenues dans les exemples, on peut mesurer :

- le coefficient de réflexion (p) à une longueur d'onde donnée et Rm (moyenne de la réflexion entre 400 et 700 nm) conformément à la norme ISO/WD 8980-4 ;
- la résistance à l'abrasion, par la valeur obtenue au test BAYER pratiqué conformément à la norme ASTM F735.81. Plus la valeur de Bayer est élevée, plus la résistance à l'abrasion l'est également. (Pour comparaison, la valeur Bayer d'un verre ORMA® à base de CR39 nu est de 1);
- l'adhésion des couches de l'empilement anti-reflets selon l'invention sur un substrat organique en utilisant le test N x 10 coups, tel que décrit dans la demande internationale WO 99/49097 ; ce test sollicite l'adhésion des couches minces déposées sur un substrat organique par frottement avec une gomme spécifique et dans les conditions (nature de la gomme et procédé de frottement) décrit dans la demande WO 99/49097 ;
- La résistance aux rayures par le test à la paille de fer (test Pdf) qui consiste à abraser la face convexe traitée du verre avec une paille de fer dans le sens des fibres en effectuant 5 aller-retour, sur une amplitude de 4 à 5 cm tout en appliquant une force constante sur la paille de fer (5kg durant l'aller, 2,5kg durant le retour). Les verres sont ensuite inspectés visuellement. On attribue une notation en fonction de la graduation suivante :

  0 aucune rayure observée
  1 verre très peu rayé (1 à 5 rayures)
  2 verre peu rayé (6 à 20 rayures)
  3 verre assez rayé (21 à 50 rayures)
  4 verre très rayé (nombre de rayures supérieur à 50)
  5 substrat nu (ORMA® en CR39®).

Les proportions, pourcentages et quantités mentionnés dans les exemples sont des proportions, pourcentages et quantités en poids sauf précision contraire.

Dans les exemples, on utilise les abréviations suivantes :

- le $\gamma$-glycidoxypropyltriméthoxysilane est désigné par GLYMO,
- les substrats en polycarbonate sont désignés par PC,
- les lentilles ophtalmiques en verre organique constitué d'un polymère de di(allylcarbonate) de diéthylène glycol sont désignées par ORMA®
- EST signifie extrait sec théorique.

Pour faciliter les comparaisons, dans tous les exemples, on a utilisé comme sol de particules minérales colloïdales de la composition (HI), un colloïde de $TiO_2$, en particulier le produit commercial Optolake 1120Z® (11RU7-A-8).

Dans une première série d'exemples, on a réalisé plusieurs articles comprenant chacun un substrat organique recouvert d'un empilement anti-reflets AR constitué d'au moins deux couches réalisées chacune à partir d'une composition durcissable de haut indice (HI), de bas indice (BI) et, éventuellement, de moyen indice (MI).

Pour cela, on a préparé plusieurs compositions à bas indice, moyen indice et haut indice, ayant des types différents respectivement:

- $B_1$ et $B_2$ à bas indice
- $M_1$, $M_2$, $M_3$, $M_4$ à moyen indice
- $H_1$, $H_2$, $H_3$, $H_4$ à haut indice.

Ces différentes compositions ont été préparées de la façon suivante (les noms commerciaux des produits sont indiqués le cas échéant) :

**- Compositions à bas indice (BI)**

● **B1** de type GLYMO/DMDES/$SiO_2$ (composition ne faisant pas partie des compositions BI selon l'invention).

On ajoute 7,35 g d'acide chlorhydrique 0,1N (HCl 0,1N, Panréac) dans 20,63 g de GLYMO (Glycidoxypropyltriméthoxysilane, Sivento) goutte à goutte et sous agitation constante .

Le mélange est laissé sous agitation pendant 15 minutes à partir de la fin de l'ajout d'HCl 0,1N. On ajoute ensuite à l'hydrolysat précédent 10,8 g de DMDES (Diméthyldiéthoxysilane, Sigma Aldrich) goutte à goutte. L'hydrolysat est laissé sous agitation à température ambiante pendant 24 heures. On ajoute 66,67 g de silice colloïdale à 30 % dans le méthanol (MA-ST, Nissan USA), et 2,68 g d'acétylacétonate d'aluminium 99 % ($[CH_3COCH=C(O-)CH_3]_3Al$, Sigma Aldrich). La solution est laissée sous agitation pendant 2 h. On ajoute 1 694 g d'isopropanol (Carlo Erba). La solution est agitée pendant 2 heures, filtrée sur une cartouche de porosité 3 $\mu$m, puis stockée au congélateur à -18 °C.

Lors du dépôt, 1 mL de cette solution est déposé par centrifugation sur les verres.

● **B2** de type Fluorosilane/TEOS

On mélange 8,1 g de fluorosilane (tridécafluoro-1,1,2,2-tétrahydrooctyl-1-triéthoxysilane: $C_{14}H_{19}F_{13}O_3Si$, Roth-Sochiel) avec 65,6 g de tétraéthoxysilane ($Si(OC_2H_5)_4$, Keyser Mackay). On laisse sous agitation 15 min. On ajoute ensuite 26,3 g d'acide chlorhydrique 0,1N (HCl 0,1N, Panréac). L'hydrolysat est agité pendant 24 h à température ambiante. On ajoute 737,7 g de 2-méthyl-2-butanol ($C_2H_5C(CH_3)_2OH$, Sigma Aldrich), 316,2 g de 2-butanone ($C_2H_5COCH_3$, Carlo Erba) et 0,28 g de catalyseur (Polycat-SA-1/10, Air products). La solution est laissée sous agitation pendant 2 h, filtrée sur une cartouche de porosité 0,1 $\mu$m, puis stockée au congélateur à -18 °C.

Lors du dépôt, 1 ml de cette solution est déposée par centrifugation sur les verres.

**- Composition à moyen indice (MI)**

Différentes compositions à moyen indice de réfraction sont synthétisées
Avec différents colloïdes de $TiO_2$ (compo sitions de type GLYMO/ $TiO_2$ non rutile).

• **M1** :

144,15 g de glycidoxypropyltriméthoxysilane (Sivento) sont pesés dans un bécher et placés sous agitation.

32,95 g d'eau acide (HCl) de concentration 0,1N (Panréac) sont ajoutés goutte à goutte.

Lorsque la totalité de l'eau est additionnée, l'hydrolysat est laissé sous agitation 15 min.

490 g de colloïde de $TiO_2$ (colloïde 1120Z(U25-A8) de CCIC, à 20 % en poids de matière sèche) sont pesés et ajoutés au glycidoxypropyltriméthoxysilane hydrolysé, la solution est agitée 24 h à température ambiante.

14,56 g d'acétylacétonate d'aluminium 99 % ($[CH_3COCH=C(O-)CH_3]_3Al$, Sigma Aldrich) sont pesés et ajoutés, puis 318,34 g de méthanol.

La solution reste sous agitation encore 1 h à température ambiante, puis l'extrait sec est mesuré.

La valeur est égale à 20 %.

La quantité de solvant à peser et ajouter doit correspondre à une dilution de 2,9 %. Le solvant de dilution est l'isopropanol (Carlo-Erba). La solution est agitée pendant 2 heures, filtrée sur une cartouche de porosité 3 $\mu$m, puis stockée au congélateur à -18 °C.

Lors du dépôt, 1 ml de cette solution est déposée par centrifugation sur les verres.

**- Compositions à moyen indice (MI) de type Glymo/$SiO_2$ optionnellement / Colloïde de $TiO_2$ rutile**

• **M2 :**

25,44 g de glycidoxypropyltriméthoxysilane (Sivento) sont pesés dans un bécher et placés sous agitation. 5,81 g d'eau acide (HCl) de concentration 0,1N sont ajoutés goutte à goutte à la solution. Lorsque la totalité de l'eau acide est additionnée, l'hydrolysat reste 15 min sous agitation. 80 g de colloïde Optolake 1120Z(8RU-7.A8) (à 20 % en poids de matière sèche) de Catalyst & Chemicals (CCIC) sont pesés, 30 g de silice Oscal 1122A8 de CCIC sont ajoutés. Cette solution est agitée 15 min puis additionnée au glycidoxypropyltriméthoxysilane hydrolysé.
Ce mélange est placé sous agitation 24h à température ambiante.
2,57 g d'acétylacétonate d'aluminium 99 % ($[CH_3COCH=C(O-)CH_3]_3Al$, Sigma Aldrich) sont pesés et ajoutés à la solution. 56,18 g de méthanol sont ajoutés au mélange.
La solution reste sous agitation encore 1 h à température ambiante, puis l'extrait sec est mesuré.
La valeur est égale à 20 %.
La quantité de solvant à peser et ajouter à la solution doit correspondre à une dilution à 2,6 % d'extrait sec.
Le solvant de dilution est l'isopropanol (Carlo-Erba). La solution est agitée pendant 2 heures, filtrée sur une cartouche de porosité 3 μm, puis stockée au congélateur à -18 °C.
Lors du dépôt, 1 mL de cette solution est déposé par centrifugation sur les verres.

• **M3 :**

Le mode opératoire est le même que pour la solution M2 mais le colloïde Optolake 1120Z(8RU-7.A8) est remplacé par le colloïde Optolake 1120Z(8RU.A8), à 20 % en poids de matière sèche.

● **M4 :**

Le mode opératoire est le même que pour la solution M2 mais le colloïde Optolake 1120Z(8RU-7.A8) est remplacé par le colloïde Optolake 1120Z(11RU-7.A8), à 20 % en poids de matière sèche.

**- Composition à haut indice (HI) de type Glymo/Colloïde de $TiO_2$ non rutile**

● **H1**

98,9 g de glycidoxypropyltriméthoxysilane (Sivento) sont pesés dans un bécher et placés sous agitation. 22,65 g d'eau acide (HCl) de concentration 0,1 N sont ajoutés goutte à goutte à la solution. Lorsque la totalité de l'eau acide est additionnée, l'hydrolysat reste 15 min sous agitation. 650 g de colloïde de $TiO_2$ (colloïde 1120Z-U25-A8 de CCIC, à 20 % en poids de matière sèche) sont ajoutés.
La solution est laissée 24 h sous agitation à température ambiante.
10 g d'acétylacétonate d'aluminium 99 % $[(CH_3COCH=C(O^-)CH_3]_3Al$, Sigma Aldrich) sont pesés et ajoutés à la solution. 218,5 g de méthanol sont ajoutés au mélange.
La solution reste sous agitation encore 1 h à température ambiante, puis l'extrait sec est mesuré.
La valeur est égale à 20 % d'extrait sec.
La quantité de solvant à peser et ajouter à la solution doit correspondre à une dilution à 3 % d'extrait sec.
Le solvant de dilution est l'isopropanol (Carlo-Erba). La solution est agitée pendant 2 heures, filtrée sur une cartouche de porosité 3 μm, puis stockée au congélateur à -18 °C.
Lors du dépôt, 1 mL de cette solution est déposé par centrifugation sur les verres.

**- Composition à haut indice (HI) de type Glymo/Colloïde de $TiO_2$ rutile**

● **H2**

90,45 g de glycidoxypropyltriméthoxysilane (Sivento) sont pesés dans un bécher et placés sous agitation. 20,66 g d'eau acide de concentration 0,1 N sont ajoutés goutte à goutte à la solution.
Lorsque la totalité de l'eau acide est additionnée, l'hydrolysat reste 15 min sous agitation. 640 g de colloïde de $TiO_2$ colloïde Optolake® 1120Z (8RU-7.A8) (à 20 % en poids de matière sèche) de CCIC sont pesés, 160 g de méthanol sont ajoutés à la solution de colloïde et placés sous agitation à température ambiante pendant 15 min.
800 g de la solution colloïde-méthanol sont prélevés et ajoutés au glycidoxypropyltriméthoxysilane hydrolysé.
La solution est laissée 24 h sous agitation à température ambiante.

9,14 g d'acétylacétonate d'aluminium 99 % ($[CH_3COCH=C(O^-)CH_3]_3Al$, Sigma Aldrich) sont pesés et ajoutés à la solution. 79,75 g de méthanol sont ajoutés au mélange.

La solution reste sous agitation encore 1 h à température ambiante, puis l'extrait sec est mesuré.

La valeur est égale à 20 %.

Le solvant de dilution est l'isopropanol (Carlo-Erba). La quantité de solvant à peser et ajouter à la solution doit correspondre à une dilution à 6 % d'extrait sec. Cette nouvelle solution à 6 % est laissée sous agitation pendant 5 h et filtrée à 3 μm puis stockée au congélateur à -18 °C.

Lors du dépôt, 1 ml de cette solution est déposée par spin coating sur les verres.

• <u>**H3**</u> :

Le mode opératoire est le même que pour la solution H2 mais le colloïde Optolake 1120Z(8RU-7.A8) est remplacé par le colloïde Optolake 1120Z(BRU.A8), à 20 % en poids de matière sèche.

• <u>**H4**</u> :

Le mode opératoire est le même que pour la solution H2 mais le colloïde Optolake 1120Z(8RU-7.A8) est remplacé par le colloïde Optolake 1120Z(11RU-7.A8).

A partir des différentes compositions ainsi préparées, on a fabriqué plusieurs exemples de lentilles comprenant chacune un substrat, un vernis et un empilement AR, de la façon suivante :

● **Dépôt de l'empilement anti-reflets multicouches**

Des substrats en verre organique en polycarbonate (PC) ou en polymère de di(allylcarbonate) de diéthylène glycol (CR 39®) ayant une face revêtue d'une couche anti-abrasion (HC) décrit ci-après ou d'un vernis (HT-450 (mélange de polymères acryliques et de photoinitiateur en solution dans des alcools (dérivés du propanol)) / vernis UV commercialisé par LTI Coburn) sont revêtus par dépôt par centrifugation (" spin coating "), sur leur face déjà revêtue, d'une couche (HI), sur laquelle est également déposée par " spin coating ", une couche (BI), de manière à constituer un verre revêtu d'un empilement anti-reflets selon l'invention.

Le revêtement anti-abrasion HC est obtenu par dépôt et durcissement d'une composition comprenant en poids, 224 parties de GLYMO, 80,5 parties de HCl 0,1 N, 120 parties de diméthyldiéthoxysilane, 718 parties de silice colloïdale à 30% dans le méthanol, 15 parties d'acétylacétonate d'aluminium et 44 parties d'éthylcellosolve. La composition comporte également 0,1% par rapport au poids total de la composition de tensioactif FLUORAD FC 430 de 3M.

Le détail des différentes étapes du procédé est décrit ci-après :

- le substrat est fixé sur un support rotatif à vitesse réglable,
- un volume compris entre 0,5 et 5 ml de la solution (HI) est déposé en 0,3 s au centre du substrat,
- on règle alors la vitesse de rotation du support à 1750-2300 tr/min, de manière à obtenir par centrifugation, le recouvrement du substrat par un film de matériau de haut indice de réfraction (durée de la centrifugation :15 s),
- le substrat ainsi revêtu est ensuite soumis pendant 16 s à un prétraitement thermique infrarouge, de manière que la température de la surface du substrat revêtu soit de 80 à 90 °C,
- le substrat revêtu est ensuite refroidi pendant 10 à 50 s à l'aide d'un flux d'air à température inférieure ou égale à la température ambiante,
- un volume compris entre 0,5 et 5 ml de la solution (BI) est alors ensuite déposée en 0,3 s sur le substrat revêtu,
- on fixe alors la vitesse de rotation du support à 1 900-2 000 tr/min, de manière à obtenir par centrifugation le recouvrement par un film de matériau de bas indice de réfraction (durée de la centrifugation : 15 s).

On obtient ainsi un substrat revêtu d'un empilement anti-reflets selon l'invention, comprenant successivement un film de matériau de haut indice de réfraction, et un film de matériau de bas indice de réfraction, qui est alors soumis pendant 8s à un prétraitement thermique infrarouge.

La précuisson effectuée est la même à chaque étape : elle consiste à chauffer la surface de la lentille à l'aide d'un moyen infra-rouge (IR). On approche une céramique infrarouge de puissance 450 watts. La température à la surface du verre passe de 25 °C à 70-80 °C en fin de précuisson.

Le refroidissement consiste à pulser de l'air à température ambiante sur la surface du verre.

● **Traitement thermique final**

Le verre optique revêtu de l'empilement anti-reflets selon l'invention est enfin soumis à un traitement thermique

final consistant en un chauffage par infrarouge ou par soufflage d'air chaud, dans une étuve, un four tunnel ou tout autre système permettant de chauffer au moins la surface de la lentille. La durée du traitement peut aller de quelques minutes à quelques heures.

Lors de ce traitement thermique final, la surface du verre atteint une température comprise entre 90 et 140°C.

Le refroidissement du verre peut se faire par attente à température ambiante ou par soufflage d'air à une température inférieure ou égale à la température ambiante pendant une durée allant de quelques secondes à quelques dizaines de minutes.

A titre d'exemple, on peut utiliser, pour le traitement thermique, un four du type suivant :

- Four Dima convectif. Le chauffage dure 40 min, et la température maximale (T° max) atteinte à la surface du verre est ~ 95°C (la température monte de l'ambiante (25°C) à 95°C en approximativement 5 minutes, puis on maintient la température à 95 °C pendant 35 minutes).
- Four Dima convectif - 13 min, T° max atteinte à la surface du verre ~ 100 °C.
- Four Dima IR - 40 min, T° max atteinte à la surface du verre ~ 100/110 °C.
- Convectif rapide (<5 min) : pistolet à air chaud, T° max atteinte à la surface du verre ~ 170 °C.

On a ainsi réalisé, dans des conditions indiquées sur le tableau 1 annexé, une première série d'exemples numérotés de 1 à 11 sur le tableau.

Dans les exemples 8 à 11, l'empilement AR est constitué de deux couches (HI/BI).

Dans les exemples 1 à 7 (les exemples 1 à 4 étant des exemples comparatifs), l'empilement AR est constitué de trois couches (MI/HI/BI).

Les vitesses de centrifugation, les temps de précuisson et de refroidissement pour la couche MI sont indiqués dans le tableau 1.

Tableau 1

| Ex. | Substrat | Hard coat | Préparation de surface | Solution 1 | Vitesse de dépôt Tr/min | Temps de précuisson (s) | Temps de refroidissement (s) | Solution 2 | Vitesse de dépôt Tr/min | Temps de précuisson (s) | Temps de refroidissemen (s) | Solution 3 | Vitesse de dépôt Tr/min | Temps de précuisson (s) | Temps de refroidissemen t (s) | Traitement thermique final (minutes) |
|---|---|---|---|---|---|---|---|---|---|---|---|---|---|---|---|---|
| 1 | CR39 | HC | Solution aqueuse soude 10% | M1 | 2000 | 18" | 11" | H1 | 2200 | 16" | 16" | B1 | 1700 | 8" | 15" | 40 mn-Dima IR |
| 2 | CR39 | HC | Solution aqueuse soude 10% | M2 | 2000 | 18" | 11" | H2 | 1400 | 16" | 16" | B1 | 1600 | 8" | 15" | 40 mn-Dima IR |
| 3 | CR39 | HC | Idem | M3 | 2300 | 18" | 11" | H3 | 1500 | 16" | 15" | B1 | 1600 | 11" | 15" | 40 mn-Dima IR |
| 4 | CR39 | HC | Idem | M4 | 1900 | 16" | 10" | H4 | 1900 | 16" | 25" | B1 | 2000 | 8" | 25" | 40 mn-Dima convectif |
| 5 | CR39 | HC | Idem | M2 | 2000 | 18" | 11" | H2 | 1400 | 16" | 16" | B2 | 1500 | 8" | 15" | 40 mn-Dima convectif |
| 6 | CR39 | HC | Idem | M3 | 2100 | 18" | 11" | H3 | 1500 | 16" | 15" | B2 | 1600 | 11" | 15" | 40 mn-Dima convectif |
| 7 | CR39 | HC | Idem | M4 | 2200 | 18" | 11" | H4 | 1400 | 16" | 16" | B2 | 1600 | 8" | 15" | 40 mn-Dima convectif |
| 8 | CR39 | HC | Idem | H4 | 2200 | 16" | 50" | B2 | 1850 | 8" | 50" | | | | | 40 mn-Dima convectif |
| 9 | PC | HT-450 | Eau-savon | H4 | 1750 | 16" | 50" | B2 | 1700 | 8" | 50" | | | | | 40 mn-Dima convectif |
| 10 | PC | HT-450 | Eau-savon | H4 | 1750 | 16" | 50" | B2 | 1700 | 8" | 50" | | | | | 13 mn-Dima convectif |
| 11 | CR39 | HC | Solution aqueuse soude 10% | H4 | 2100 | 16" | 50" | B2 | 1850 | 8" | 50" | | | | | 5 mn convectif rapide |

Les exemples 1 à 4 sont des exemples comparatifs

Les verres des exemples ont été soumis à un test de durabilité 'dit test QUV S&P) dans les conditions prévues ci-après:

Le test est pratiqué sur un dispositif Q PANEL, modèle QUV.

Le verre est placé pendant deux heures dans une enceinte à 45 °C et sous atmosphère saturée en eau (condensation d'eau à la surface du verre). On arrête ensuite la condensation d'eau et on soumet le verre à une iradiation UV (0,75 W/$m^2$/nm) pendant deux heures à 45 °C.

Le verre reste ensuite trois heures sans irradiation à 45°C avec à nouveau une condensation d'eau.

Puis finalement le verre est soumis à une irradiation UV (0,75 W/$m^2$/nm) pendant trois heures à 45 °C, sans condensation.

Le test ci-dessus est répété plusieurs fois.

Une sollicitation mécanique est effectuée sur ce verre toutes les 10 heures.

Le test est arrêté lorsque la sollicitation mécanique induit une dégradation notable de l'empilement AR.

Le test mécanique pratiqué est le suivant :

On utilise un chiffon microfibre synthétique pour le nettoyage de verres de lunettes, que l'on peut se procurer chez les opticiens.

Le chiffon, constitué de filaments de polyamide et de Nylon® doit avoir au minimum les dimensions suivantes : 30mm x 30mm, une épaisseur de 0,35mm à 0,45mm avec une densité minimale de fibres de 10000/$cm^2$. Un exemple d'un tel chiffon est celui fabriqué par la société KANEBO sous la dénomination Savina Minimax.

Le chiffon est plongé dans l'eau déionisée pendant au moins deux minutes, jusqu'à ce qu'il soit imprégné d'eau

Le chiffon est ensuite récupéré, plié en trois couches superposées et placé sur la zone centrale du verre. On vient alors appliquer, sur le centre du chiffon, cette gomme d'un diamètre de 6,5 à 7mm. On applique sur cette gomme une force de 5 $\pm$ 1N et l'on effectue alors un mouvement de va-et-vient sur une distance de 30mm (le centre du mouvement étant centré sur le centre du verre), en effectuant un cycle (un aller-retour) par seconde.

On effectue au total 25 cycles, puis on fait tourner le verre de 90° autour de son axe. On effectue de nouveau 25 cycles.

Le verre est ensuite examiné visuellement à l'oeil nu.

Le verre disposé face à un fond noir, est examiné en réflexion.

La source du faisceau réfléchi est une source de 200 lux.

Les zones où l'empilement anti-reflets est délaminé apparaissent lumineuses.

Un verre est considéré comme ayant une dégradation notable de l'anti-reflets si plus de 5% de la surface du verre dans la zone centrale de 20mm de diamètre, soumise à la sollicitation mécanique, est délaminé.

Les résultats sont donnés dans les tableaux 2 (exemples comparatifs 1 à 4) et 3 (exemples selon l'invention) ci-dessous.

Tableau 2

| Système | Durée du test jusqu'à détérioration |
|---|---|
| Exemple 1* | 50 h |
| Exemple 2* | 70 h |
| Exemple 3* | 60 h |
| Exemple 4* | 70 h |
| *Exemples comparatifs | |

Tableau 3

| Système | Durée du test jusqu'à détérioration |
|---|---|
| Exemple 5 | 240 h |
| Exemple 6 | 240 h |
| Exemple 7 | 260 h |
| Exemple 8 | 220 h |

Les résultats montrent que les empilements anti-reflets selon l'invention ont une durée jusqu'à détérioration

bien supérieure à celle des empilements des exemples comparatifs. Notamment, l'empilement de l'exemple 5 de l'invention qui ne diffère de l'exemple comparatif 2 que par l'emploi de la couche bas indice B2 (au lieu de la couche B1) a une durée jusqu'à détérioration plus de 3 fois supérieure à celle de l'exemple comparatif 2.

Pour vérifier les propriétés optiques, on a déterminé l'indice Rm (moyenne de la réflexion entre 400 et 700 nm) selon la norme ISO/WD 8980-4 et l'on a pu noter les effets indiqués sur les tableaux suivants :

Tableau 4

| Effet du bas indice : | |
|---|---|
| Système | Rm |
| Exemple 1 | 2,0-2,2 |
| Exemple 5 | 1,4 |
| Exemple 6 | 1,2 |
| Exemple 7 | 1,3 |
| Exemple 8 | 1,1-1,3 |

Tableau 5

| Effet Substrat/Revêtement anti-abrasion (HC) : | |
|---|---|
| Système | Rm |
| Exemple 8 | 1,1-1,3 |
| Exemple 9 | 1,1 |

D'autre part, il apparaît que l'on obtient de bonnes propriétés mécaniques, même pour un traitement thermique très rapide. C'est ainsi que les exemples 8 et 11, soumis à des traitements, respectivement de 40 mn et 5 mn, donnent les résultats suivants :

Tableau 6

| Système | Paille de fer | N10 cps | Bayer Sable |
|---|---|---|---|
| Exemple 8 | 3 | 12 | 3±1 |
| Exemple 11 | 3 | 12 | 3±1 |

On a également mesuré l'angle de contact statique avec l'eau de la surface des verres traités anti-reflets selon l'invention (exemples 5 à 11) et ceux des exemples comparatifs. Les résultats figurent au tableau 7.

Tableau 7

| Exemples | Angle de contact (avec l'eau) |
|---|---|
| 1-4 (comparatifs) | 75° |
| 5-11 | 100° |

L'angle de contact élevé révèle de bonnes propriétés antisalissure.
Dans tous ces exemples, le solvant utilisé pour la dilution des différentes solutions était un isopropanol ($(CH_3)_2CHOH$), Carlo Erba).

Le fluorosilane utilisé dans les exemples est : $CF_3(CF_2)_5CH_2CH_2Si(OC_2H_5)_3$.

D'autres exemples ont aussi été préparés dans les conditions suivantes :

● **Préparation de la composition HI**

La formulation de la composition à haut indice de réfraction se fait en deux étapes.

1. On prépare tout d'abord une première solution, dite solution mère (HI), en procédant de la manière suivante :

- on fait tomber goutte à goutte 20,7 parties d'acide chlorhydrique 0,1 N dans une solution qui contient 90,5 parties de GLYMO, 800 parties en poids de Optolake 1120Z® (11RU7-A.8),
- la solution hydrolysée est agitée pendant 24 h à température ambiante,
- puis on ajoute à la composition 9,1 parties d'acétylacétonate d'aluminium et 79,8 parties d'un mélange des solvants suivants : 2-propanol, 4-hydroxy-4-méthyl-2-pentanone, et pentanone.

La solution obtenue constitue la solution mère (HI).
L'extrait sec théorique de la solution mère est de l'ordre de 20 % en matière solide.
2. On prépare ensuite une solution fille (HI) à partir de la solution mère (HI), en diluant celle-ci dans un mélange de solvants. Pour cela, on ajoute à 100 g de solution mère (HI) :

- 163,6 g de 2-propanol,
- 70 g de 2-butanone.

La solution obtenue constitue la solution fille HI dont l'extrait sec théorique est de 6 %.

● **Préparation de la composition (BI)**

La formulation de la composition (BI) se fait également en deux étapes.

1. On prépare tout d'abord une première solution, dite solution mère (BI) faisant tomber goutte à goutte 26,3 parties d'acide chlorhydrique 0,1 N dans une solution contenant 65,6 parties de tétraéthoxysilane (TES) et 8,1 % de fluorosilane.
La solution obtenue constitue la solution mère BI et l'extrait sec théorique de cette solution est de 30 ± 1%.
2. On prépare ensuite une solution fille (BI) à partir de la solution mère (BI), en diluant celle-ci dans un mélange de solvants.

Pour cela, on ajoute à 100 g de solution mère (BI), 0,28 g de Polycat® SA 1/110, 737,7 g de 2-méthyl-2-butanol, 316.2 g de 2-butanone, on obtient une solution qui constitue la solution fille (BI) dont l'extrait sec théorique est de l'ordre de 2,6 %.
A partir des compositions (HI) et (BI) ainsi préparées, on a fabriqué une seconde série d'exemples par dépôt d'un empilement AR sur un substrat transparent dans les conditions indiquées plus haut pour la première série.
On a ainsi réalisé trois exemples de lentilles :

EXEMPLE A

Une lentille ORMA® a été revêtue avec un empilement anti-reflets selon l'invention, lui-même revêtu d'un vernis à base d'hydrolysat de silane tel que décrit dans le brevet US SN 08/681,102 de la demanderesse, et plus particulièrement tel que décrit dans l'exemple 3.

EXEMPLE B

Un substrat en polycarbonate d'un vernis UV commercialisé sous la dénomination HT450 par la société LTI Coburn, tel que décrit précédemment, a été revêtu avec un empilement anti-reflets selon l'invention.

EXEMPLE C

Un substrat en polycarbonate revêtu d'un vernis commercialisé sous la dénomination commerciale L5051® par la société LESCO a été revêtu avec un empilement anti-reflets selon l'invention

PROPRIETES

Les substrats revêtus des exemples A à C ont été soumis aux tests indiqués précédemment pour évaluer leurs performances. Les résultats concernant les propriétés optiques sont rassemblés dans le tableau 8 ci-après.

Tableau 8

| Substrat | Rm (%) |
|---|---|
| Exemple A | 1,3 |
| Exemple B | 1,1 |
| Exemple C | 1,1 |

Les valeurs de réflexion moyenne (Rm) montrent que les exemples A, B et C comportant un empilement anti-reflets constitués de deux couches et réalisé selon l'invention sont des anti-reflets performants.
Les résultats concernant les propriétés d'adhésion et de résistance à l'abrasion sont rassemblés dans les tableaux ci-après.

Tableau 9

| Substrat | Préparation de surface | Nx10 coups | Bayer sable |
|---|---|---|---|
| Exemple A | Bain alcoolique ou plasma | 12 | 2-4 |
| Exemple B | Eau/savon | 12 | 1-2 |
| Exemple C | Eau/savon | 12 | 1-2 |

Les exemples A, B et C montrent une bonne adhérence (test NX10 coups), (un verre anti-reflets standard ayant des valeurs NX10 coups de l'ordre de 3) et une bonne résistance à l'abrasion.
La préparation de la surface du revêtement anti-abrasion permet d'obtenir un bon niveau d'adhérence. Un simple nettoyage à l'eau et au savon permet d'obtenir une bonne adhérence de l'empilement anti-reflets selon l'invention sur des vernis photopolymérisables tels que ceux décrits dans les exemples B et C.

Tableau 10

| Substrat | Pdf** | QUV-S&P |
|---|---|---|
| Exemple A | 3 | >200 h |
| Exemple B | 5 | >80 h |
| Exemple C | 5 | >100 h |
| **Pdf : test paille de fer | | |

Les exemples A, B et C révèlent une très bonne durabilité.
L'exemple A présente une bonne résistance à la paille de fer.
Les exemples B et C présentent une résistance moindre à la paille de fer, ce qui est dû essentiellement à la nature des vernis HT450 et L5051 utilisés.

## Revendications

**1.** Article comprenant un substrat ayant au moins une surface principale recouverte d'un empilement anti-reflets multicouche, **caractérisé en ce que** l'empilement anti-reflets multicouche comprend, dans l'ordre indiqué en partant du substrat :

a) une couche haut indice (HI), ayant un indice de réfraction $n_D^{25}$ de 1,50 à 2,00 et résultant du durcissement d'une première composition durcissable et comprenant une matrice hybride organique-inorganique résultant de l'hydrolyse et de la condensation d'au moins un composé précurseur comportant un groupement époxy ou (méth)acryloxy et au moins deux fonctions hydrolysables en groupements silanol, au sein de laquelle est dispersé au moins un oxyde métallique colloïdal ou au moins un chalcogénure colloïdal ou un mélange de ces composés sous forme de particules ayant un diamètre de 1 à 100 nm, préférentiellement de 2 à 50 nm, et directement sur cette couche haut indice (HI),

b) une couche bas indice (BI), ayant un indice de réfraction $n_D^{25}$ allant de 1,38 à 1,44 obtenue par dépôt et durcissement d'une seconde composition durcissable et comprenant le produit d'hydrolyse et de condensation de :

(i) au moins un composé précurseur (I) comprenant 4 fonctions hydrolysables par molécule de formule

$$Si(W)_4$$

dans laquelle les groupes W, identiques ou différents sont des groupements hydrolysables, et à la condition que les groupements W ne représentent pas tous en même temps un atome d'hydrogène.
(ii) au moins un silane précurseur (II) porteur d'au moins un groupement fluoré et comprenant au moins deux groupements hydrolysables par molécule,

ladite seconde composition comprenant au moins 10 % en masse de fluor dans son extrait sec théorique (EST), et le rapport molaire I / I + II du composé précurseur (I) à la somme composé précurseur (I) + silane précurseur (II) de la seconde composition étant supérieur à 80 %.

2. Article selon la revendication 1, **caractérisé en ce qu'**une surface principale du substrat est revêtue d'une couche anti-abrasion ou d'une couche de revêtement primaire et d'une couche de revêtement anti-abrasion, l'empilement anti-reflets étant déposé sur le revêtement anti-abrasion.

3. Article selon l'une des revendications 1 et 2, **caractérisé en ce que**, en outre, de la silice ($SiO_2$) est dispersée dans la matrice de la couche haut indice.

4. Article selon l'une quelconque des revendications précédentes, **caractérisé en ce que** les oxydes métalliques et chalcogénures colloïdaux dispersées dans la matrice de la couche haut indice sont choisis dans le groupe comprenant: $TiO_2$, ZnO, ZnS, ZnTe, CdS, CdSe, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, oxyde ternaire à base de bismuth, $MoS_2$, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$.

5. Article selon l'une quelconque des revendications 1 à 3, **caractérisé en ce que** les particules d'oxyde métallique dispersées dans la matrice de la couche haut indice sont constituées à partir d'un oxyde de titane composite sous forme rutile.

6. Article selon l'une des revendications 4 et 5, **caractérisé en ce que** les particules minérales dispersées dans la matrice hybride organique-inorganique de la couche haut indice (HI) ont une structure composite à base de $TiO_2$, $SnO_2$, $ZrO_2$ et $SiO_2$.

7. Article selon l'une des revendications précédentes, **caractérisé en ce que** au moins 60 %, de préférence au moins 65 %, et mieux au moins 70 % en masse de l'extrait sec théorique (EST) de la couche bas indice provient du composé précurseur (I).

8. Article selon l'une quelconque des revendications précédentes, **caractérisé en ce que** le rapport molaire I/I+II du composé précurseur (I) à la somme composé précurseur (I) + silane précurseur (II) est d'au moins 85 %, de préférence 90 %, et mieux 95 %.

9. Article selon l'une quelconque des revendications précédentes, **caractérisé en ce que** les groupements hydrolysables W représentent un groupe OR, Cl, H, R étant un alkyle.

10. Article selon l'une quelconque des revendications précédentes, **caractérisé en ce que** la composition durcissable de la couche bas indice (BI) comprend un tri- ou dialkoxysilane différent des silanes du composé précurseur (I) de forme $Si(W)_4$ et du fluorosilane précurseur (II) dans une proportion en poids ne dépassant pas 10 % du poids total de silanes présents dans ladite composition.

11. Article selon l'une quelconque des revendications 1 à 9, **caractérisé en ce que** la composition durcissable de la couche bas indice (BI) ne comprend que les silanes du composé précurseur (I) et du fluorosilane précurseur (II).

**12.** Article selon l'une quelconque des revendications précédentes, **caractérisé en ce que** l'empilement anti-reflets comprend seulement une couche haut indice (HI) recouverte d'une couche bas indice (BI).

**13.** Article selon l'une quelconque des revendications 1 à 11, **caractérisé en ce que** l'empilement anti-reflets comprend au moins trois couches superposées, respectivement en partant du substrat, une couche moyen indice (MI), une couche haut indice (HI) et une couche bas indice (BI), la couche moyen indice (MI) ayant un indice de réfraction $n_D^{25}$ de 1,45 à 1,80.

**14.** Article selon l'une quelconque des revendications précédentes, **caractérisé en ce que** la couche de matériau de haut indice de réfraction (HI) a un indice de réfraction supérieur à 1,7, de préférence allant de 1,72 à 1,82, et mieux de l'ordre de 1,77.

**15.** Article selon l'une quelconque des revendications précédentes, **caractérisé en ce que** la couche de matériau de haut indice de réfraction (HI) a une épaisseur physique allant de 10 à 200 nm, et de préférence allant de 80 à 150 nm.

**16.** Article selon l'une quelconque des revendications précédentes, **caractérisé en ce que** la couche de matériau de bas indice de réfraction (BI) a une épaisseur physique allant de 40 à 150 nm, et de préférence de l'ordre de 90 nm.

**17.** Article selon l'une quelconque des revendications précédentes, **caractérisé en ce que** la matrice organique de la composition (HI) est un hydrolysat d'un époxyalkoxysilane

**18.** Article d'optique selon la revendication 17, **caractérisé en ce que** l'époxyalkoxysilane comporte un groupement époxy, et trois groupements alcoxy, ces derniers étant directement liés à l'atome de silicium.

**19.** Article d'optique selon la revendication 18, **caractérisé en ce que** l'époxyalkoxysilane répond à la formule (I) :

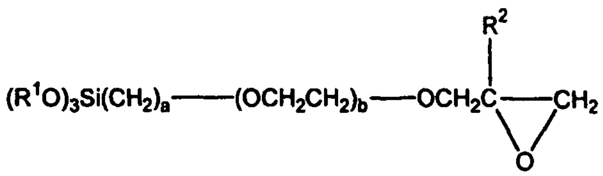 (I)

dans laquelle :

$R^1$ est un groupement alkyle de 1 à 6 atomes de carbone, préférentiellement un groupement méthyle ou éthyle,
$R^2$ est un groupement méthyle ou un atome d'hydrogène,
a est un nombre entier de 1 à 6,
b représente 0,1 ou 2.

**20.** Article selon la revendication 19, **caractérisé en ce que** l'époxysilane est le γ-glycidoxypropyltriméthoxysilane.

**21.** Article selon l'une quelconque des revendications précédentes, **caractérisé en ce que** la composition durcissable de la couche haut indice (HI) est associée à un catalyseur constitué d'un composé de l'aluminium choisi parmi :

- les chélates d'aluminium,
- les composés de formule (II) ou (III) :

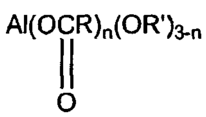 (II)

$(R'O)_{3-n}Al(OSiR''_3)_n$ (III)

dans lesquelles :

R et R' sont des groupements alkyles à chaîne linéaire ou ramifiée de 1 à 10 atomes de carbone,
R" est un groupement alkyle à chaîne linéaire ou ramifiée de 1 à 10 atomes de carbone, un groupement phényle, un groupe

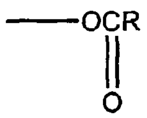

où R a la signification indiquée ci-dessus, et n est un nombre entier de 1 à 3,
un solvant organique dont le point d'ébullition T, à pression atmosphérique, est compris entre 70° et 140 °C, étant présent dans la composition durcissable (HI) lorsque le catalyseur est un chélate d'aluminium.

**22.** Article selon la revendication 21, **caractérisé en ce que** le catalyseur de la composition durcissable (HI) est un chélate d'aluminium, et de préférence l'acétylacétonate d'aluminium.

**23.** Article selon l'une quelconque des revendications précédentes, **caractérisé en ce que** le composé précurseur (I) de la seconde composition durcissable (BI) est un tétraalcoxysilane, et de préférence un tétraéthoxysilane.

**24.** Article selon l'une quelconque des revendications précédentes, **caractérisé en ce que** le silane précurseur (II) est choisi parmi les perfluorosilanes.

**25.** Article selon l'une quelconque des revendications précédentes, **caractérisé en ce que** le substrat est un substrat en verre organique, éventuellement pourvu d'un revêtement anti-abrasion, et/ou d'un revêtement anti-choc.

**26.** Article selon l'une quelconque des revendications précédentes, **caractérisé en ce qu'**il comprend, en outre, un revêtement anti-salissures hydrophobe déposé sur le revêtement anti-reffets.

**27.** Procédé de fabrication d'un article tel que défini selon l'une quelconque des revendications 1 à 26, comprenant les étapes de :

- dépôt sur au moins l'une des surfaces du substrat éventuellement revêtue d'un revêtement anti-abrasion ou d'une couche de primaire et d'un revêtement anti-abrasion d'au moins une couche de matériau de haut indice de réfraction (HI), par application puis durcissement d'une première composition durcissable (HI) comprenant une matrice hybride organique-inorganique résultant de l'hydrolyse et de la condensation d'au moins un composé précurseur comportant un groupement époxy ou (méth)acryloxy et au moins deux fonctions hydrolysables en groupements silanol, au sein de laquelle est dispersé au moins un oxyde métallique et/ou au moins un chalcogénure sous forme de particules ayant un diamètre de 1 à 100 nm, préférentiellement de 2 à 50 nm,
- dépôt sur ladite couche (HI) d'au moins une couche de matériau de bas indice de réfraction (BI), par application puis durcissement d'une seconde composition durcissable (BI), de préférence exempte de toute charge minérale et comprenant le produit d'hydrolyse et de condensation de :

(i) au moins un composé précurseur (I) comprenant 4 fonctions hydrolysables par molécule de formule

$$Si(W)_4$$

dans laquelle les groupes W, identiques ou différents sont des groupements hydrolysables, et à la condition que les groupements ne représentent pas tous en même temps un atome d'hydrogène ;
(ii) au moins un silane précurseur (II) porteur d'au moins un groupement fluoré et comprenant au moins deux groupements hydrolysables par molécule,

ladite couche superficielle bas indice comprenant au moins 10 % en masse de fluor dans son extrait sec théorique (EST), et le rapport molaire I / I + II du composé précurseur (I) à la somme composé précurseur (I) + silane précurseur (II) de la seconde composition étant supérieur à 80 %.

**28.** Procédé selon la revendication 27, **caractérisé en ce que** les couches de matériau de haut indice de réfraction (HI) et de bas indice de réfraction (BI) sont déposées par dépôt au trempé ou par centrifugation, et de préférence par centrifugation.

**29.** Procédé selon la revendication 27 ou 28, **caractérisé en ce qu'**il comporte, entre le dépôt de la couche de matériau de haut indice de réfraction (HI) et celui de la couche de matériau de bas indice de réfraction (BI), un traitement de surface de la couche (HI) afin d'en préparer la surface pour le dépôt de la couche (BI).

**30.** Procédé selon la revendication 29, **caractérisé en ce que** le traitement de la surface de la couche de matériau de haut indice de réfraction (HI) est un traitement infrarouge, suivi d'un refroidissement par un flux d'air à température ambiante.

**31.** Procédé selon l'une quelconque des revendications 27 à 30, **caractérisé en ce que** l'empilement anti-reflets est un empilement tricouche (MI/HI/BI) comprenant successivement, et dans l'ordre à partir du substrat, une couche de matériau de moyen indice de réfraction (MI), une couche de matériau de haut indice de réfraction (HI), et une couche de matériau de bas indice de réfraction (BI).

**32.** Procédé selon l'une quelconque des revendications 27 à 31, **caractérisé en ce que** la couche de matériau de haut indice de réfraction (HI) a un indice de réfraction de 1,72 à 1,82 et de préférence de l'ordre de 1,77.

**33.** Procédé selon l'une quelconque des revendications 27 à 32, **caractérisé en ce que** la couche de matériau de bas indice de réfraction (BI) a un indice de réfraction allant de 1,38 à 1,44, de préférence de l'ordre del,43.

**34.** Procédé selon l'une quelconque des revendications 27 à 33, **caractérisé en ce que** la couche de matériau de haut indice de réfraction (HI) a une épaisseur physique allant de 10 à 200 nm, préférentiellement de 80 à 150 nm.

**35.** Procédé selon l'une quelconque des revendications 27 à 34, **caractérisé en ce que** la couche de matériau de bas indice de réfraction (BI) a une épaisseur physique allant de 40 à 150 nm, préférentiellement de l'ordre de 90 nm.

**36.** Procédé selon l'une quelconque des revendications 27 à 35, **caractérisé en ce que** le composé précurseur de la première composition durcissable (HI) est un hydrolysat d'un époxyalcoxysilane.

**37.** Procédé selon la revendication 36, **caractérisé en ce que** l'époxyalkoxysilane comporte un groupement époxy, et trois groupements alkoxy, ces derniers étant directement liés à l'atome de silicium.

**38.** Procédé selon la revendication 37, **caractérisé en ce que** le silane à groupement époxy est un époxysilane répondant à la formule (I) :

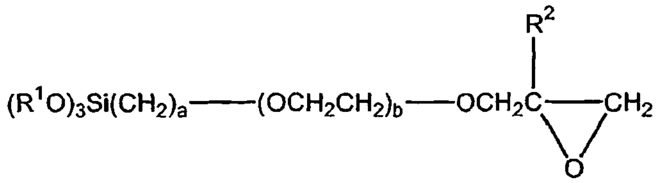

(I)

dans laquelle :

$R^1$ est un groupement alkyle de 1 à 6 atomes de carbone, préférentiellement un groupement méthyle ou éthyle,
$R^2$ est un groupement méthyle ou un atome d'hydrogène,
a est un nombre entier de 1 à 6,
b représente 0,1 ou 2.

**39.** Procédé selon la revendication 38, **caractérisé en ce que** l'époxyalkoxysilane est le γ-glycidoxypropyltriméthoxysilane.

**40.** Procédé selon l'une quelconque des revendications 27 à 39, **caractérisé en ce que** la composition durcissable (HI) est associée à un catalyseur constitué d'un composé de l'aluminium choisi parmi :

- les chélates d'aluminium,
- les composés de formule (II) ou (III) :

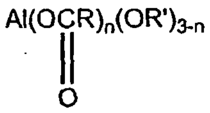 (III)

$(R'O)_{3-n}Al(OSiR''_3)_n$ (IV)

dans lesquelles :

R et R' sont des groupements alkyles à chaîne linéaire ou ramifiée de 1 à 10 atomes de carbone,
R" est un groupement alkyle à chaîne linéaire ou ramifiée de 1 à 10 atomes de carbone, un groupement phényle, un groupe

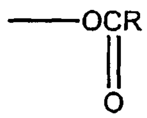

où R a la signification indiquée ci-dessus, et n est un nombre entier de 1 à 3,
un solvant organique dont le point d'ébullition T, à pression atmosphérique, est compris entre 70° et 140 °C, étant présent dans la composition (HI) lorsque le catalyseur est un chélate d'aluminium.

**41.** Procédé selon la revendication 40, **caractérisé en ce que** le catalyseur de la composition (HI) est un chélate d'aluminium, et de préférence l'acétylacétonate d'aluminium.

**42.** Procédé selon l'une quelconque des revendications 27 à 41, **caractérisé en ce que** le composé précurseur (I) de la composition à bas indice (BI) est un tétraalcoxysilane, et de préférence un tétraéthoxysilane.

**43.** Procédé selon l'une quelconque des revendications 27 à 42, **caractérisé en ce que** le silane précurseur (II) de la composition à bas indice (BI) est un perfluorosilane.

## Claims

**1.** An article comprising a substrate having at least one main surface coated with a multi-layer anti-reflection stack, **characterized in that** the multi-layer anti-reflection stack comprises, in the order indicated starting from the substrate:

a) a high index (HI) layer, having a refractive index $n_D^{25}$ of 1.50 to 2.00 and resulting from the curing of a first curable composition and comprising an organic-inorganic hybrid matrix resulting from the hydrolysis and condensation of at least one precursor compound having an epoxy or (meth)acryloxy group and at least two functions hydrolysable to silanol groups, within which at least one colloidal metal oxide or at least one colloidal chalcogenide or a mixture of these compounds is dispersed in the form of particles from 1 to 100 nm in diameter, preferably from 2 to 50 nm, and directly on this high index layer (HI):

b) a low index (LI) layer, having a refractive index $n_D^{25}$ ranging from 1.38 to 1.44 obtained by deposition and curing of a second curable composition and comprising the product of hydrolysis and condensation of:

(i) at least one precursor compound (I) comprising four hydrolysable functions per molecule of formula

$$Si(W)_4$$

wherein the groups W, identical or different, are hydrolysable groups and provided that the groups W do not all represent at the same time a hydrogen atom,
(ii) at least one precursor silane (II) having at least one fluorinated group and comprising at least two hydrolysable groups per molecule,

said second composition comprising at least 10% by mass of fluorine in its theoretical dry extract (TDE), and the molar ratio I/ I + II of the precursor compound (I) to the sum of the precursor compound (I) + precursor silane (II) of the second composition being greater than 80%.

2. An article according to claim 1, **characterized in that** a main surface of the substrate is coated with an anti-abrasion layer or a layer of a primer coating and a layer of an anti-abrasion coating, the anti-reflection stack being deposited onto the anti-abrasion coating.

3. An article according to one of claims 1 or 2, **characterized in that** moreover, silica ($SiO_2$) is dispersed in the matrix of the high index layer.

4. An article according to any one of the preceding claims, **characterized in that** the colloidal metal oxides and chalcogenides dispersed in the matrix of the high index layer are selected from the group comprising: $TiO_2$, ZnO, ZnS, ZnTe, CdS, CdSe, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, bismuth-based ternary oxide, $MoS_2$, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$.

5. An article according to any one of claims 1 to 3, **characterized in that** the particles of metal oxide dispersed in the matrix of the high index layer are made of a composite titanium oxide in the form of rutile.

6. An article according to one of claims 4 or 5, **characterized in that** the mineral particles dispersed in the organic-inorganic hybrid matrix of the high index layer (HI) have a composite structure based on $TiO_2$, $SnO_2$, $ZrO_2$ and $SiO_2$.

7. An article according to any one of the preceding claims, **characterized in that** at least 60%, preferably at least 65% and, more preferably, at least 70% by mass of the theoretical dry extract (TDE) of the low index layer are made of the precursor compound (I).

8. An article according to one of the preceding claims, **characterized in that** the molar ratio I/I+II of the precursor compound (I) to the sum of the precursor compound (I) + precursor silane (II) is at least 85%, preferably 90% and, more preferably 95%.

9. An article according to any one of the preceding claims, **characterized in that** the hydrolysable groups W represent an OR, Cl or H group, R being an alkyl group.

10. An article according to any one of the preceding claims, **characterized in that** the curable composition of the low index layer (LI) comprises a tri- or dialkoxysilane different from the silanes of the precursor compound (I) of formula $Si(W)_4$ and from the precursor fluorosilane (II) in a proportion by weight not exceeding 10% of the total weight of the silanes present in said composition.

11. An article according to any one of claims 1 to 9, **characterized in that** the curable composition of the low index layer (LI) comprises only the silanes of the precursor (I) and the precursor fluorosilane (II).

12. An article according to any one of the preceding claims, **characterized in that** the anti-reflection stack comprises only a high index layer (HI) coated with a low index layer (LI).

13. An article according to any one of claims 1 to 11, **characterized in that** the anti-reflection stack comprises at least three superimposed layers, starting from the substrate, a medium index layer (MI), a high index layer (HI) and a low index layer (LI), respectively, the medium index layer (MI) having a refractive index $n_D^{25}$ of 1.45 to 1.80.

14. An article according to any one of the preceding claims, **characterized in that** the layer of material of high refractive index (HI) has a refractive index greater than 1.7, preferably ranging from 1.72 to 1.82 and, more preferably of about

1.77.

**15.** An article according to any one of the preceding claims, **characterized in that** the layer of material of high refractive index (HI) has a physical thickness ranging from 10 to 200 nm, and preferably ranging from 80 to 150 nm.

**16.** An article according to any one of the preceding claims, **characterized in that** the layer of material of low refractive index (LI) has a physical thickness ranging from 40 to 150 nm, and preferably of about 90 nm.

**17.** An article according to any one of the preceding claims, **characterized in that** the organic matrix of the composition (HI) is a hydrolysate of an epoxyalkoxysilane.

**18.** Optical article according to claim 17, **characterized in that** the epoxyalkoxysilane comprises an epoxy group and three alkoxy groups, these latter being directly linked to the silicon atom.

**19.** Optical article according to claim 18, **characterized in that** the epoxyalkoxysilane has to the formula (I):

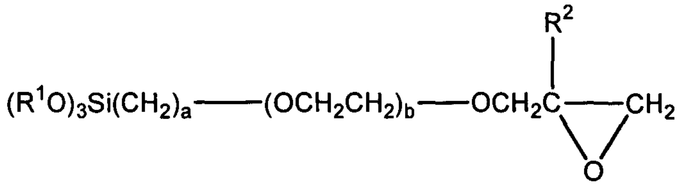

(I)

wherein :

$R^1$ is an alkyl group of 1 to 6 carbon atoms, preferably a methyl or ethyl group,
$R^2$ is a methyl group or a hydrogen atom,
a is an integer from 1 to 6,
b represents 0.1 or 2.

**20.** An article according to claim 19, **characterized in that** the epoxyalkoxysilane is γ-glycidoxypropyltrimethoxysilane.

**21.** An article according to any one of the preceding claims, **characterized in that** the curable composition of the high index layer (HI) is combined with a catalyst made of an aluminium compound selected from:

- aluminium chelates,
- compounds of formula (II) or (III):

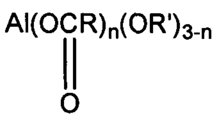

(II)

$(R'O)_{3-n}Al(OSiR''_3)_n$ (III)

wherein :

R and R' are linear or branched chain alkyl groups of 1 to 10 carbon atoms,
R" is a linear or branched chain alkyl group of 1 to 10 carbon atoms, a phenyl group, a group

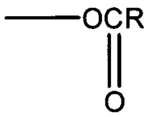

wherein R has the meaning specified above, and n is an integer from 1 to 3,
an organic solvent, the boiling point T of which, at atmospheric pressure, ranges from 70°C to 140°C, present in the curable composition (HI) when the catalyst is an aluminium chelate.

**22.** An article according to claim 21, **characterized in that** the catalyst of the curable composition (HI) is an aluminium chelate, and preferably aluminium acetylacetonate.

**23.** An article according to any one of the preceding claims, **characterized in that** the precursor compound (I) of the second curable composition (LI) is a tetraalkoxysilane, and preferably a tetraethoxysilane.

**24.** An article according to any one of the preceding claims, **characterized in that** the precursor silane (II) is selected from perfluorosilanes.

**25.** An article according to any one of the preceding claims, **characterized in that** the substrate is a substrate made of an organic glass, optionally provided with an anti-abrasion coating and/or a impact-resistant coating.

**26.** An article according to any one of the preceding claims, **characterized in that** it further comprises a hydrophobic anti-fouling coating deposited onto the anti-reflection coating.

**27.** A method for the making of an article according to any one of claims 1 to 26, comprising the steps of:

- depositing onto at least one of the surfaces of the substrate optionally coated with an anti-abrasion coating or a primer layer and an anti-abrasion coating at least one layer of material of high refractive index (HI), by application and then curing of a first curable composition (HI) comprising an organic-inorganic hybrid matrix resulting from the hydrolysis and condensation of at least one precursor compound having an epoxy or (meth)acryloxy group and at least two functions hydrolysable to silanol groups, within which at least one metal oxide and/or at least one chalcogenide is dispersed in the form of particles having a diameter of 1 to 100 nm, and preferably of 2 to 50 nm,
- depositing onto said layer (HI) of at least one layer of material of low refractive index (LI), by application then curing of a second curable composition (LI), preferably free of any mineral charge and comprising the product of hydrolysis and condensation of:

(i) at least one precursor compound (I) comprising 4 hydrolysable functions per molecule of formula

$$Si\ (W)_4$$

wherein the W groups, identical or different, are hydrolysable groups and provided that the W groups do not all represent at the same time a hydrogen atom,
(ii) at least one precursor silane (II) having at least one fluorinated group and comprising at least two hydrolysable groups per molecule,

said second composition comprising at least 10% by mass of fluorine in its theoretical dry extract (TDE), and the molar ratio I/ I + II of the precursor compound (I) to the sum of the precursor compound (I) + precursor silane (II)) of the second composition being greater than 80%.

**28.** A method according to claim 27, **characterized in that** the layers of material of high refractive index (HI) and low refractive index (LI) are deposited by means of dip coating or by means of spin coating, and preferably by spin coating.

**29.** A method according to claim 27 or 28, **characterized in that** it comprises, between the deposition of the layer of material of high refractive index (HI) and that of the layer of material of low refractive index (LI), a surface treatment of the layer (HI) in order to prepare the surface for the deposition of the layer (LI).

**30.** A method according to claim 29, **characterized in that** the treatment of the surface of the layer of material of high refractive index (HI) is an infrared treatment, followed by cooling by means of a stream of air at ambient temperature.

**31.** A method according to any one of claims 27 to 30, **characterized in that** the anti-reflection stack is a triple layer stack (MI/HI/LI) comprising successively, and in the order starting from the substrate, a layer of material of medium refractive index (MI), a layer of material of high refractive index (HI) and a layer of material of low refractive index (LI).

**32.** A method according to any one of the claims 27 to 31, **characterized in that** the layer of material of high refractive index (HI) has a refractive index of 1.72 to 1.82, and preferably of about 1.77.

**33.** A method according to any one of claims 27 to 32, **characterized in that** the layer of material of low refractive index (LI) has a refractive index varying from 1.38 to 1.44, and preferably of about 1.43.

**34.** A method according to any one of claims 27 to 33, **characterized in that** the layer of material of high refractive index (HI) has a physical thickness ranging from 10 to 200 nm, and preferably from 80 to 150 nm.

**35.** A method according to any one of claims 27 to 34, **characterized in that** the layer of material of low refractive index (LI) has a physical thickness ranging from 40 to 150 nm, and preferably of about 90 nm.

**36.** A method according to any one of claims 27 to 35, **characterized in that** the precursor compound of the first curable composition (HI) is a hydrolysate of an epoxyalkoxysilane

**37.** A method according to claim 36, **characterized in that** the epoxyalkoxysilane comprises an epoxy group and three alkoxy groups, these latter being directly linked to the silicon atom.

**38.** A method according to claim 37, **characterized in that** the silane with an epoxy group is an epoxysilane having the formula (I):

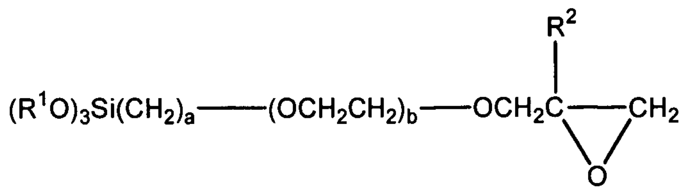

(I)

wherein :

$R^1$ is an alkyl group of 1 to 6 carbon atoms, preferably a methyl or ethyl group,
$R^2$ is a methyl group or a hydrogen atom,
a is an integer from 1 to 6,
b represents 0.1 or 2.

**39.** A method according to claim 38, **characterized in that** the epoxysilane is γ-glycidoxypropyltrimethoxysilane.

**40.** A method according to any one of claims 27 to 39, **characterized in that** the curable composition (HI) is combined with a catalyst made of an aluminium compound selected from:

- aluminium chelates,
- compounds of formula (II) or (III):

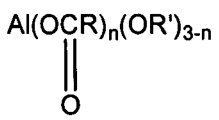

(II)

$$(R'O)_{3-n}Al(OSiR''_3)_n \quad \text{(III)}$$

wherein:

R and R' are linear or branched chain alkyl groups of 1 to 10 carbon atoms,
R" is a linear or branched chain alkyl group of 1 to 10 carbon atoms, a phenyl group, a group

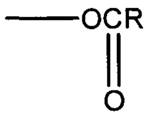

wherein R has the meaning specified above, and n is an integer from 1 to 3,
an organic solvent, the boiling point T of which, at atmospheric pressure, ranges from 70°C to 140°C, present in the curable composition (HI) when the catalyst is an aluminium chelate.

**41.** A method according to claim 40, **characterized in that** the catalyst of the composition (HI) is an aluminium chelate, and preferably aluminium acetylacetonate.

**42.** A method according any one of claims 27 to 41, **characterized in that** the precursor compound (I) of the composition of low index (LI) is a tetraalkoxysilane, and preferably a tetraethoxysilane.

**43.** A method according to any one of claims 27 to 42, **characterized in that** the precursor silane (II) of the composition of low index (LI) is a perfluorosilane.

**Patentansprüche**

**1.** Gegenstand umfassend ein Substrat mit zumindest einer Hauptfläche, die mit einer mehrlagigen Antireflexschichtung bedeckt ist, **dadurch gekennzeichnet, dass** die mehrlagige Antireflexschichtung ausgehend vom Substrat in der angegebenen Reihenfolge umfasst:

a) eine Hochindexlage (HI), die einen Brechungsindex $n^{25}_D$ von 1,50 bis 2,00 hat und aus dem Härten einer ersten härtbaren Zusammensetzung resultiert und eine organisch-anorganisch hybride Matrix umfasst, die aus der Hydrolyse und der Kondensation von zumindest einer Vorläuferverbindung resultiert, die eine Epoxy- oder (Meth)acryloxy-Gruppierung und zumindest zwei hydrolisierbare Gruppen in Silanol-Gruppierungen umfasst, innerhalb welcher zumindest ein kolloidales Metalloxyd oder zumindest ein kolloidales Chalkogen oder eine Mischung dieser Verbindungen in Form von Partikeln mit einem Durchmesser von 1 bis 100nm, vorzugsweise von 2 bis 50nm, und direkt auf dieser Hochindexlage (HI),
b) eine Niederindexlage (BI) mit einem Brechungsindex $n^{25}_D$ von 1,38 bis 1,44, die durch Ablagern und Härten einer zweiten härtbaren Zusammensetzung erhalten wird und umfasst das Hydrolyse- und Kondensationsprodukt von:

(i) zumindest eine Vorläuferverbindung (I), die vier hydrolisierbare Gruppen pro Molekül der Formel

$$Si(W)_4$$

umfasst, in der die identischen oder unterschiedlichen Gruppen W hydrolisierbare Gruppierungen sind, und unter der Bedingung, dass die Gruppierungen W nicht alle zugleich ein Wasserstoffatom aufweisen,
(ii) zumindest einen Silan-Vorläufer (II), Träger von zumindest einer fluorierten Gruppierung und umfassend zumindest zwei hydrolisierbare Gruppierungen pro Molekül,

wobei die zweite Zusammensetzung zumindest 10 Gewichts-% von Fluor in seinem theoretischen Trockenextrakt (EST) umfasst und das Molverhältnis I / I+II der Vorläuferverbindung (I) zur zusammengenommenen Summe von Vorläufer (I) plus Silan-Vorläufer (II) der zweiten Zusammensetzung größer als 80% ist.

**2.** Gegenstand gemäß Anspruch 1, **dadurch gekennzeichnet dass** eine Hauptoberfläche des Substrats mit einer Anti-Abrieblage oder einer Primärbeschichtungslage und einer Anti-Abriebbeschichtungslage bedeckt ist, wobei die Antireflexschichtung auf der Anti-Abriebbeschichtung deponiert ist.

**3.** Gegenstand gemäß einem der Ansprüche 1 und 2, **dadurch gekennzeichnet, dass** unter anderem Siliziumoxyd ($SiO_2$) in der Matrix der Hochindexlage verteilt ist.

**4.** Gegenstand nach einem der vorhergehenden Ansprüche, **dadurch gekennzeichnet, dass** die Metalloxide und die kolloidalen Chalkogene, die in der Matrix der Hochindexlage verteilt sind, innerhalb der Gruppe ausgewählt sind, die umfasst: $TiO_2$, ZnO, ZnS, ZnTe, CdS, CdSe, $IrO_2$, $WO_3$, $Fe_2O_3$, $FeTiO_3$, $BaTi_4O_9$, $SrTiO_3$, $ZrTiO_4$, $MoO_3$, $CO_3O_4$, $SnO_2$, Ternäres Oxyd auf Bismuthbasis, $MoS_2$, $RuO_2$, $Sb_2O_4$, $BaTi_4O_9$, MgO, $CaTiO_3$, $V_2O_5$, $Mn_2O_3$, $CeO_2$, $Nb_2O_5$, $RuS_2$.

**5.** Gegenstand nach einem der Ansprüche 1 bis 3, **dadurch gekennzeichnet, dass** die Metalloxydpartikel, die in der Matrix der Hochindexlage verteilt sind, ausgehend von einem Titankompositoxyd in rutiler Form gebildet sind.

**6.** Gegenstand nach einem der Ansprüche 4 und 5, **dadurch gekennzeichnet, dass** die mineralischen Partikel, die in der organisch-anorganischen Hybridmatrix der Hochindexlage (HI) verteilt sind, eine zusammengesetzte Struktur auf der Basis von $TiO_2$, $SnO_2$, $ZrO_2$, und $SiO_2$ haben.

**7.** Gegenstand gemäß einem der vorangehenden Ansprüche, **dadurch gekennzeichnet, dass** zumindest 60 Gewichts-%, vorzugsweise zumindest 65 Gewichts-% und am Besten zumindest 70 Gewichts-% des theoretischen Trockenextrakts (EST) der Niederindexlage von der Vorläuferverbindung (I) stammt.

**8.** Gegenstand nach einem der vorhergehenden Ansprüche, **dadurch gekennzeichnet, dass** das Molverhältnis I/I-II der Vorläuferverbindung (I) zu der zusammengenommenen Summe von Vorläufer(I) + Silanvorläufer (II) zumindest 85%, vorzugsweise 90% und am Besten 95% ist.

**9.** Gegenstand nach einem der vorangehenden Ansprüche, **dadurch gekennzeichnet, dass** die hydrolisierbaren Gruppierungen W eine OR-, Cl-, H-Gruppe darstellen, wobei R ein Alkyl ist.

**10.** Gegenstand nach einem der vorangehenden Ansprüche, **dadurch gekennzeichnet, dass** die härtbare Zusammensetzung der Niederindexlage (BI) ein Tri- oder Dialkoxysilan umfasst, das unterschiedlich von den Silanen der Vorläuferverbindung (I) von der Form $Si(W)_4$ und dem Fluorsilanvorläufer (II) ist, in einem Gewichtsverhältnis, das nicht 10% des Gesamtgewichts der in der vorliegenden Zusammensetzung vorhandenen Silane übersteigt, umfasst.

**11.** Gegenstand nach einem der Ansprüche 1 bis 9, **dadurch gekennzeichnet, dass** die härtbare Zusammensetzung der Niederindexlage (BI) nur Silane der Vorläuferverbindung (I) und des Fluorsilanvorläufers (II) umfasst.

**12.** Gegenstand nach einem der vorangehenden Ansprüche, **dadurch gekennzeichnet, dass** die Antireflexschichtung nur eine Hochindexlage (HI) umfasst, die von einer Niederindexlage (BI) überdeckt ist.

**13.** Gegenstand nach einem der Ansprüche 1 bis 11, **dadurch gekennzeichnet, dass** die Antireflexschichtung zumindest drei überlagerte Lagen umfasst, ausgehend vom Substrat eine Mittelindexlage (MI), eine Hochindexlage (HI) und eine Niederindexlage (BI), wobei die Mittelindexlage (MI) einen Brechungsindex $n^{25}_D$ von 1,45 bis 1,80 hat.

**14.** Gegenstand nach einem der vorangehenden Ansprüche, **dadurch gekennzeichnet, dass** die Lage aus Material mit hohem Brechungsindex (HI) einen Brechungsindex größer als 1,7, vorzugsweise von 1,72 bis 1,82 und am Besten um 1,77 hat.

**15.** Gegenstand nach einem der vorangehenden Ansprüche, **dadurch gekennzeichnet, dass** die Lage aus Material mit hohem Brechungsindex (HI) eine physische Dicke von 10 bis 200nm und vorzugsweise von 80 bis 150nm hat.

**16.** Gegenstand nach einem der vorangehenden Ansprüche, **dadurch gekennzeichnet, dass** die Lage aus Material mit niedrigem Brechungsindex (BI) eine physische Dicke von 40 bis 150nm und vorzugsweise um 90nm hat.

**17.** Gegenstand nach einem der vorangehenden Ansprüche, **dadurch gekennzeichnet, dass** die organische Matrix der Zusammensetzung (HI) ein Hydrolysat eines Epoxyalkoxysilans ist.

**18.** Optischer Gegenstand gemäß Anspruch 17, **dadurch gekennzeichnet, dass** das Epoxyalkoxysilan eine Epoxygruppierung und drei Alcoxy-Gruppierungen umfasst, wobei letztere direkt mit dem Siliciumatom verbunden sind.

**19.** Optischer Gegenstand gemäß Anspruch 18, **dadurch gekennzeichnet, dass** das Epoxyalkoxysilan der Formel (I):

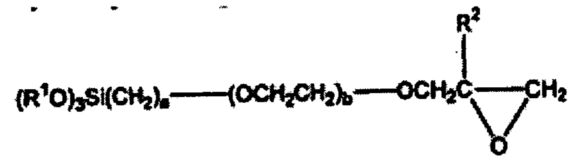

entspricht, in der

$R^1$ eine Alkyl-Gruppierung von einem bis sechs Kohlenstoffatomen ist, vorzugsweise eine Methyl- oder Ethylgruppierung,
$R^2$ eine Methyl-Gruppierung oder ein Wasserstoffatom ist,
a eine Ganzzahl von 1 bis 6 ist,
b 0, 1 oder 2 darstellt.

**20.** Gegenstand gemäß Anspruch 19, **dadurch gekennzeichnet, dass** das Epoxysilan das γ-Glycidoxypropyltrimethoxysilan ist.

**21.** Gegenstand nach einem der vorangehenden Ansprüche, **dadurch gekennzeichnet, dass** die härtbare Zusammensetzung der Hochindexlage (HI) einem Katalysator zugeordnet ist, der aus einer Aluminiumverbindung gebildet ist, die ausgewählt ist aus:

- den Aluminiumchelaten,
- den Verbindungen der Formel (II) oder (III):

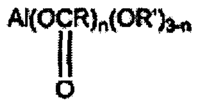 (II)

$$(R'O)_{3-n}Al(OSiR''_3)_n \qquad (III)$$

in denen:

R und R' Alkylgruppierungen mit linearer oder verzweigter Kette von einem bis zehn Kohlenstoffatomen sind,
R" eine Alkylgruppierung mit linearer oder verzweigter Kette von einem bis zehn Kohlenstoffatomen, eine Phenylgruppierung, eine Gruppe

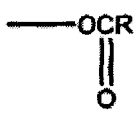

ist,
wobei R die oben angegebene Bedeutung hat und n eine ganze Zahl von 1 bis 3 ist,
wobei ein organisches Lösungsmittel dessen Siedepunkt T bei Atmosphärendruck enthalten ist zwischen 70° und 140°C, in der härtbaren Zusammensetzung (HI) vorhanden ist, wenn der Katalysator ein Aluminiumchellat

ist.

**22.** Gegenstand gemäß Anspruch 21, **dadurch gekennzeichnet, dass** der Katalysator der härtbaren Zusammensetzung (HI) ein Aluminiumchellat und vorzugsweise Aluminium-Acetylacetonat ist.

**23.** Gegenstand gemäß einem der vorhergehenden Ansprüche, **dadurch gekennzeichnet, dass** die Vorläuferverbindung (I) der zweiten härtbaren Zusammensetzung (BI) ein Tetraalkoxysilan und vorzugsweise ein Tetraethoxysilan ist.

**24.** Gegenstand gemäß einem der vorhergehenden Ansprüche, **dadurch gekennzeichnet, dass** der Silanvorläufer (II) ausgewählt ist aus den Perfluorsilanen.

**25.** Gegenstand gemäß einem der vorhergehenden Ansprüche, **dadurch gekennzeichnet, dass** das Substrat ein Substrat aus organischem Glas ist, eventuell versehen mit einer Anti-Abrieb-Beschichtung und/oder einer Anti-Stoß-Beschichtung.

**26.** Gegenstand gemäß einem der vorhergehenden Ansprüche, **dadurch gekennzeichnet, dass** er unter anderem eine hydrophobe Anti-Schmutz-Beschichtung umfasst, die auf der Anti-Reflex-Beschichtung deponiert ist.

**27.** Verfahren zur Herstellung eines Gegenstands wie definiert gemäß einem der Ansprüche 1 bis 26, umfassend die Schritte:

- Deponieren an zumindest einer der Oberflächen des Substrats, die eventuell mit einer Anti-Abrieb-Beschichtung oder einer Primärlage und einer Anti-Abrieb-Beschichtung bedeckt ist, von zumindest einer Lage aus Material mit hohem Brechungsindex (HI) durch Auftragen und folgendes Härten einer ersten härtbaren Zusammensetzung (HI), die eine organisch/anorganisch-hybride Matrix umfasst, die aus der Hydrolyse und der Kondensation von zumindest einer Vorläuferverbindung resultiert, die eine Epoxy- oder (Meth)acryloxy-Gruppierung und zumindest zwei hydrolisierbare Gruppen in Silanol-Gruppen umfasst, in welcher zumindest ein Metalloxyd und/oder zumindest ein Chalkogen in Form von Partikeln mit einem Durchmesser von 1 bis 100 nm, vorzugsweise von 2 bis 50 nm verteilt ist,
- Deponieren auf der Lage (HI) zumindest eine Lage aus Material mit niedrigem Brechungsindex (BI) durch Auftragen und folgendes Härten einer zweiten härtbaren Zusammensetzung (BI), vorzugsweise frei von jeglichem mineralischem Inhalt und umfassend das Hydrolyse- und Kondensationsprodukt von:

(i) zumindest einer Vorläuferverbindung (I) umfassend vier hydrolisierbare Gruppen pro Molekül der Formel

$$Si(W)_4$$

in der die identischen oder unterschiedlichen Gruppen W hydrolisierbare Gruppierungen sind, und unter der Bedingung, dass die Gruppierungen nicht alle zugleich ein Wasserstoffatom aufweisen;
(ii) zumindest ein Silan-Vorläufer (II), der Träger von zumindest einer fluorierten Gruppierung ist und zumindest zwei hydrolisierbare Gruppierungen von Molekülen umfasst,

wobei die oberflächliche Lage mit niedrigem Index zumindest 10 Gew.-% an Fluor in ihrem theoretischen Trockenextrakt (EST) umfasst, und das Molverhältnis I/I + II der Vorläufer-Verbindung (I) zur zusammengenommenen Summe Vorläufer (I) + Silan-Vorläufer (II) der zweiten Zusammensetzung höher als 80% ist.

**28.** Verfahren nach Anspruch 27, **dadurch gekennzeichnet, dass** die Materiallagen mit hohem Brechungsindex (HI) und von niedrigem Brechungsindex (BI) durch Tauchablagerungen oder durch Zentrifugation deponiert werden, und vorzugsweise durch Zentrifugation.

**29.** Verfahren gemäß Anspruch 27 oder 28, **dadurch gekennzeichnet, dass** es zwischen dem Deponieren der Lage aus Material mit hohem Brechungsindex (HI) und jenem der Lage aus Material mit niedrigem Brechungsindex (BI) eine Behandlung der Oberfläche der Lage (HI) umfasst, um die Oberfläche für das Deponieren der Lage (BI) **dadurch** vorzubereiten.

**30.** Verfahren gemäß Anspruch 29, **dadurch gekennzeichnet, dass** die Behandlung der Oberfläche der Lage aus Material mit hohem Brechungsindex (HI) eine Infrarot-Behandlung gefolgt von einer Abkühlung mittels Luftstrom

bei Raumtemperatur ist.

**31.** Verfahren gemäß einem der Ansprüche 27 bis 30, **dadurch gekennzeichnet, dass** die Anti-Reflex-Schichtung eine dreilagige Schichtung (MI/HI/BI) ist, die aufeinanderfolgend in der Reihenfolge ausgehend vom Substrat eine Lage aus Material mit mittlerem Brechungsindex (MI), eine Lage aus Material mit hohem Brechungsindex (HI) und eine Lage aus Material mit niedrigem Brechungsindex (BI) umfasst.

**32.** Verfahren nach einem der Ansprüche 27 bis 31, **dadurch gekennzeichnet, dass** die Lage aus Material mit hohem Brechungsindex (HI) einen Brechungsindex von 1,72 bis 1,82 und vorzugsweise um 1,77 hat.

**33.** Verfahren nach einem der Ansprüche 27 bis 32, **dadurch gekennzeichnet, dass** die Lage aus Material mit niedrigem Brechungsindex (BI) einen Brechungsindex von 1,38 bis 1,44, vorzugsweise um 1,43 hat.

**34.** Verfahren nach einem der Ansprüche 27 bis 33, **dadurch gekennzeichnet, dass** die Lage aus Material mit hohem Brechungsindex (HI) eine physische Dicke von 10 bis 200 nm, vorzugsweise von 80 bis 150 nm hat.

**35.** Verfahren nach einem der Ansprüche 27 bis 34, **dadurch gekennzeichnet, dass** die Lage aus Material mit niedrigem Brechungsindex (BI) eine physische Dicke von 40 bis 150 nm, vorzugsweise um 90 nm hat.

**36.** Verfahren nach einem der Ansprüche 27 bis 35, **dadurch gekennzeichnet, dass** die Vorläuferverbindung der ersten härtbaren Zusammensetzung (HI) ein Hydrolisat eines Epoxyalkoxysilans ist.

**37.** Verfahren nach Anspruch 36, **dadurch gekennzeichnet, dass** das Epoxyalkoxysilan eine Epoxy-Gruppierung und drei Alkoxy-Gruppierungen umfasst, wobei letztere direkt mit dem Silizium-Atom verbunden sind.

**38.** Verfahren nach Anspruch 37, **dadurch gekennzeichnet, dass** das Silan mit der Epoxy-Gruppierung ein Epoxysilan ist, das der Formel (I) gehorcht:

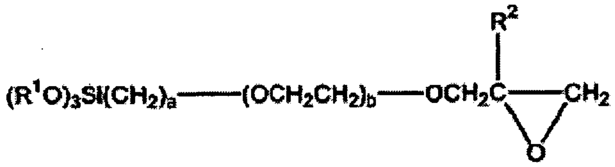 (I)

in welcher:

$R^1$ eine Alkyl-Gruppierung von 1 bis 6 Kohlenstoffatomen, vorzugsweise eine Methyl- oder Ethyl-Gruppierung ist,
$R^2$ eine Methyl-Gruppierung oder ein Wasserstoffatom ist,
a eine ganze Zahl von 1 bis 6 ist,
b 0, 1 oder 2 darstellt.

**39.** Verfahren nach Anspruch 38, **dadurch gekennzeichnet, dass** das Epoxyalkoxysilan das γ-Glycidoxypropyltrimethoxysilan ist.

**40.** Verfahren nach einem der Ansprüche 27 bis 39, **dadurch gekennzeichnet, dass** die härtbare Zusammensetzung (HI) einem Katalysator zugeordnet ist, der aus einer Aluminium-Verbindung gebildet ist, ausgewählt aus:

- den Aluminiumchellaten,
- den Verbindungen der Formel (II) oder (III):

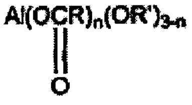 (II)

$(R'O)_{3-n}Al(OSiR''_3)_n$ (III)

in denen:

R und R' Alkyl-Gruppierungen mit linearer oder verzweigter Kette von einem bis zehn Kohlenstoffatomen sind, R" eine Alkyl-Gruppe mit linearer oder verzweigter Kette von einem bis zehn Kohlenstoffatomen, eine Phenyl-Gruppierung, eine Gruppe

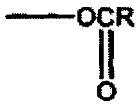

wo R die oben angegebene Bedeutung hat und n eine ganze Zahl von 1 bis 3 ist,
wobei ein organisches Lösungsmittel, dessen Siedepunkt T bei Atmosphärendruck zwischen 70° und 140° C enthalten ist, in der Zusammensetzung (HI) vorhanden ist, wenn der Katalysator ein Aluminiumchellat ist.

**41.** Verfahren nach Anspruch 40, **dadurch gekennzeichnet, dass** der Katalysator der Zusammensetzung (HI) ein Aluminiumchellat und vorzugsweise ein Aluminiumacetylacetonat ist.

**42.** Verfahren nach einem der Ansprüche 27 bis 41, **dadurch gekennzeichnet, dass** die Vorläuferverbindung (I) der Zusammensetzung mit niedrigem Index (BI) ein Tetraalkoxysilan und vorzugsweise ein Tetraethoxysilan ist.

**43.** Verfahren nach einem der Ansprüche 27 bis 42, **dadurch gekennzeichnet, dass** der Silan-Vorläufer (II) der Zusammensetzung mit niedrigem Index (BI) ein Perfluorsilan ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1279443 A
- JP 11310755 B
- JP 2000204301 A
- US 5081192 A
- US 5763061 A
- US 6183872 B
- US 5739639 A
- US 5922787 A
- US 6337235 B
- US 6277485 B
- EP 933377 A
- US 4211823 A
- FR 2734827 A
- JP 63141001 A
- JP 63087223 A
- US 5015523 A
- EP 0404111 A
- US 5316791 A
- EP 0680492 A
- EP 0614957 A
- WO 9949097 A
- US 08681102 B